# EUROPEAN PATENT APPLICATION

(11) **EP 4 831 688 A1**
(43) Date of publication of application: **28.10.2026**
(21) Application number: 25744445.5
(22) Date of filing: 07.01.2025
(51) Int. Cl.: G01S 17/00

(54) **DETECTION METHOD AND APPARATUS**

(30) Priority: 24.01.2024 CN 202410104317
(71) Applicant: Yinwang Intelligent Technologies Co., Ltd., Shenzhen, Guangdong 518110 (CN)
(72) Inventor: DAI, Ruihong, Shenzhen, Guangdong 518129 (CN); ZHU, Yadan, Shenzhen, Guangdong 518129 (CN); WANG, Shuai, Shenzhen, Guangdong 518129 (CN); QIN, Jiarong, Shenzhen, Guangdong 518129 (CN); LOU, Kongyu, Shenzhen, Guangdong 518129 (CN)
(74) Representative: MERH-IP Matias Erny Reichl Hoffmann Patentanwälte PartG mbB
(86) International application number: PCT/CN2025/071122
(87) International publication number: WO 2025/157001

(57) **Abstract**

This application discloses a detection method and apparatus. The method includes: sequentially sending a transmit signal through N rows of lighting channels arranged in a column direction in an array transmitter in a detection apparatus, and receiving an echo signal of the transmit signal through N rows of receiving channels arranged in a column direction in an array receiver in the detection apparatus. Correspondences between lighting channels in the array transmitter and receiving channels in the array receiver differ in two parts, that is, a correspondence between some lighting channels in the array transmitter and some receiving channels in the array receiver changes. The detection method is applied to a scenario in which a vertical angle of view of the array transmitter does not match a vertical angle of view of the array receiver, and can resolve a problem of a mismatch between a receiving angle of view and a transmitting angle of view of a flash lidar, and help improve detection efficiency of the array receiver and detection performance of the lidar.

## Description

This application claims priority to Chinese Patent Application No. 202410104317.3, filed with the China National Intellectual Property Administration on January 24, 2024 and entitled "DETECTION METHOD AND APPARATUS", which is incorporated herein by reference in its entirety.

### TECHNICAL FIELD

This application relates to the lidar field, and in particular, to a detection method and apparatus.

### BACKGROUND

Pure solid-state flash lidars are widely used due to their advantages of lower costs, smaller size, and better stability. In a one-dimensional addressable flash lidar, an array transmitter and an array receiver perform row-by-row activation and row-by-row reception in a horizontal or vertical direction, to scan an entire target surface.

An optical system of the flash lidar mainly includes a transmitting optical system and a receiving optical system. The transmitting optical system uses a transmitting optical lens to shape laser emitted by the array transmitter and to map the shaped laser onto a target field of view. The receiving optical system uses a receiving optical lens to receive, from the target field of view, scattered light resulting from laser emitted by the array transmitter and to image the scattered light onto a target surface of the array receiver.

However, manufacturing and installation tolerances of the transmitting optical lens and the receiving optical lens cause a mismatch between a receiving angle of view and a transmitting angle of view of the flash lidar, which reduces detection efficiency of the array receiver, and affects detection performance of the lidar.

### SUMMARY

This application discloses a detection method and apparatus, which can resolve a problem of a mismatch between a receiving angle of view and a transmitting angle of view of a flash lidar, and help improve detection efficiency of an array receiver and detection performance of the lidar.

According to a first aspect, this application provides a detection method, applied to a detection apparatus including an array transmitter and an array receiver, where the array transmitter includes multiple rows of lighting channels, and the array receiver includes multiple rows of receiving channels; and the method includes: sequentially sending a transmit signal through N rows of lighting channels arranged in a column direction in the array transmitter, and receiving an echo signal of the transmit signal through N rows of receiving channels arranged in a column direction in the array receiver, where
a correspondence between 1^{st} to (M-1)^{th} rows of lighting channels in the column direction in the array transmitter and a receiving channel in the column direction in the array receiver is different from a correspondence between M^{th} to N^{th} rows of lighting channels and the receiving channel in the column direction in the array receiver; or a correspondence between 1^{st} to (M-1)^{th} rows of receiving channels in the column direction in the array receiver and a lighting channel in the column direction in the array transmitter is different from a correspondence between M^{th} to N^{th} rows of receiving channels and the lighting channel in the column direction in the array transmitter; and both M and N are positive integers greater than 2, and M is less than N.

For example, in the array transmitter, each row of lighting channels includes multiple light-emitting elements, and each row of lighting channels includes a same quantity of light-emitting elements. In the array receiver, each row of receiving channels includes multiple detection elements, and each row of receiving channels includes a same quantity of detection elements.

For example, the N rows of lighting channels may be some lighting channels in the array transmitter.

In an implementation, sequentially sending the transmit signal through the N rows of lighting channels arranged in the column direction in the array transmitter includes: sequentially activating one row of lighting channels or multiple adjacent rows of lighting channels in the N rows of lighting channels in the column direction in the array transmitter to send the transmit signal.

In the foregoing method, in the detection apparatus, there are two correspondences between lighting channels in the transmitter and receiving channels in the receiver or correspondences between lighting channels in the transmitter and receiving channels in the receiver differ in two parts, that is, a correspondence between some lighting channels in the array transmitter and some receiving channels in the array receiver changes. In this way, the lighting channels are sequentially activated in the column direction in the array transmitter to send the transmit signal, and the echo signal of the transmit signal is received by receiving channels, corresponding to the lighting channels, in the array receiver. The detection method is applied to a scenario in which a vertical angle of view of the array transmitter does not match a vertical angle of view of the array receiver, and can resolve a problem of a mismatch between a receiving angle of view and a transmitting angle of view of a flash lidar, and help improve detection efficiency of the array receiver and detection performance of the lidar.

Optionally, the correspondence between the 1^{st} to (M-1)^{th} rows of lighting channels and the receiving channel in the column direction in the array receiver being different from the correspondence between the M^{th} to N^{th} rows of lighting channels and the receiving channel in the column direction in the array receiver includes: The 1^{st} to (M-1)^{th} rows of lighting channels respectively correspond to the 1^{st} to (M-1)^{th} rows of receiving channels in the N rows of receiving channels; and the M^{th} to N^{th} rows of lighting channels respectively correspond to (M+1)^{th} to N^{th} rows of receiving channels in the N rows of receiving channels.

In an example, that the 1^{st} to (M-1)^{th} rows of lighting channels respectively correspond to the 1^{st} to (M-1)^{th} rows of receiving channels in the N rows of receiving channels includes: The j^{th} row of lighting channels corresponds to the j^{th} row of receiving channels, where j is an integer from 1 to M-1; and that the M^{th} to N^{th} rows of lighting channels respectively correspond to the (M+1)^{th} to N^{th} rows of receiving channels in the N rows of receiving channels includes: The M^{th} row of lighting channels corresponds to the (M+1)^{th} row of receiving channels, the (M+1)^{th} row of lighting channels corresponds to an (M+2)^{th} row of receiving channels, ..., an (N-1)^{th} row of lighting channels corresponds to the N^{th} row of receiving channels, and the N^{th} row of lighting channels corresponds to the N^{th} row of receiving channels.

In the foregoing implementation, in the M^{th} to (N-1)^{th} rows of lighting channels, a row sequence number of the lighting channel is less than a row sequence number of a receiving channel corresponding to the lighting channel. This situation is applied to a scenario in which the vertical angle of view of the array transmitter is greater than the vertical angle of view of the array receiver. This can improve a matching degree between the vertical angle of view of the lighting channel and the vertical angle of view of the receiving channel, increase energy received by the receiving channel, and resolve the problem of the mismatch between the receiving angle of view and the transmitting angle of view of the flash lidar.

In another example, that the M^{th} to N^{th} rows of lighting channels respectively correspond to the (M+1)^{th} to N^{th} rows of receiving channels in the N rows of receiving channels includes: The M^{th} row of lighting channels corresponds to (M+1)^{th} and (M+2)^{th} rows of receiving channels, the (M+1)^{th} row of lighting channels corresponds to (M+2)^{th} and (M+3)^{th} rows of receiving channels, ..., the (N-2)^{th} row of lighting channels corresponds to (N-1)^{th} and N^{th} rows of receiving channels, the (N-1)^{th} row of lighting channels corresponds to (N-2)^{th} and (N-1)^{th} rows of receiving channels, and the N^{th} row of lighting channels corresponds to (N-1)^{th} and N^{th} rows of receiving channels.

Optionally, the correspondence between the 1^{st} to (M-1)^{th} rows of lighting channels and the receiving channel in the column direction in the array receiver being different from the correspondence between the M^{th} to N^{th} rows of lighting channels and the receiving channel in the column direction in the array receiver includes: The 1^{st} to (M-1)^{th} rows of lighting channels respectively correspond to the 1^{st} to (M-1)^{th} rows of receiving channels in the N rows of receiving channels; and the M^{th} to N^{th} rows of lighting channels respectively correspond to (M-1)^{th} to (N-1)^{th} rows of receiving channels in the N rows of receiving channels.

In an example, that the 1^{st} to (M-1)^{th} rows of lighting channels respectively correspond to the 1^{st} to (M-1)^{th} rows of receiving channels in the N rows of receiving channels includes: The j^{th} row of lighting channels corresponds to the j^{th} row of receiving channels, where j is an integer from 1 to M-1; and that the M^{th} to N^{th} rows of lighting channels respectively correspond to the (M-1)^{th} to (N-1)^{th} rows of receiving channels in the N rows of receiving channels includes: The M^{th} row of lighting channels corresponds to the (M-1)^{th} row of receiving channels, an (M+1)^{th} row of lighting channels corresponds to the M^{th} row of receiving channels, ..., an (N-1)^{th} row of lighting channels corresponds to an (N-2)^{th} row of receiving channels, and the N^{th} row of lighting channels corresponds to the (N-1)^{th} row of receiving channels.

In the foregoing implementation, in the M^{th} to N^{th} rows of lighting channels, a row sequence number of the lighting channel is greater than a row sequence number of a receiving channel corresponding to the lighting channel. This situation is applied to a scenario in which the vertical angle of view of the array transmitter is less than the vertical angle of view of the array receiver. This can improve a matching degree between the vertical angle of view of the lighting channel and the vertical angle of view of the receiving channel, increase energy received by the receiving channel, and resolve the problem of the mismatch between the receiving angle of view and the transmitting angle of view of the flash lidar.

Optionally, the correspondence between the 1^{st} to (M-1)^{th} rows of receiving channels and the lighting channel in the column direction in the array transmitter being different from the correspondence between the M^{th} to N^{th} rows of receiving channels and the lighting channel in the column direction in the array transmitter includes: The 1^{st} to (M-1)^{th} rows of receiving channels respectively correspond to the 1^{st} to (M-1)^{th} rows of lighting channels in the N rows of lighting channels; and the M^{th} to N^{th} rows of receiving channels respectively correspond to (M-1)^{th} to (N-1)^{th} rows of lighting channels in the N rows of lighting channels.

In an example, that the 1^{st} to (M-1)^{th} rows of receiving channels respectively correspond to the 1^{st} to (M-1)^{th} rows of lighting channels in the N rows of lighting channels includes: The j^{th} row of receiving channels corresponds to the j^{th} row of lighting channels, where j is an integer from 1 to M-1; and that the M^{th} to N^{th} rows of receiving channels respectively correspond to the (M-1)^{th} to (N-1)^{th} rows of lighting channels in the N rows of lighting channels includes: The M^{th} row of receiving channels corresponds to the (M-1)^{th} row of lighting channels, an (M+1)^{th} row of receiving channels corresponds to the M^{th} row of lighting channels, ..., the (N-1)^{th} row of receiving channels corresponds to the (N-2)^{th} row of lighting channels, and the N^{th} row of receiving channels corresponds to the (N-1)^{th} row of lighting channels.

In the foregoing implementation, in the M^{th} to N^{th} rows of receiving channels, a row sequence number of the receiving channel is greater than a row sequence number of a lighting channel corresponding to the receiving channel. This situation is applied to a scenario in which the vertical angle of view of the array transmitter is greater than the vertical angle of view of the array receiver. This can improve a matching degree between the vertical angle of view of the lighting channel and the vertical angle of view of the receiving channel, increase energy received by the receiving channel, and resolve the problem of the mismatch between the receiving angle of view and the transmitting angle of view of the flash lidar.

Optionally, the correspondence between the 1^{st} to (M-1)^{th} rows of receiving channels and the lighting channel in the column direction in the array transmitter being different from the correspondence between the M^{th} to N^{th} rows of receiving channels and the lighting channel in the column direction in the array transmitter includes: The 1^{st} to (M-1)^{th} rows of receiving channels respectively correspond to the 1^{st} to (M-1)^{th} rows of lighting channels in the N rows of lighting channels; and the M^{th} to N^{th} rows of receiving channels respectively correspond to (M+1)^{th} to N^{th} rows of lighting channels in the N rows of lighting channels.

In an example, that the 1^{st} to (M-1)^{th} rows of receiving channels respectively correspond to the 1^{st} to (M-1)^{th} rows of lighting channels in the N rows of lighting channels includes: The j^{th} row of receiving channels corresponds to the j^{th} row of lighting channels, where j is an integer from 1 to M-1; and that the M^{th} to N^{th} rows of receiving channels respectively correspond to the (M+1)^{th} to N^{th} rows of lighting channels in the N rows of lighting channels includes: The M^{th} row of receiving channels corresponds to the (M+1)^{th} row of lighting channels, the (M+1)^{th} rows of receiving channels corresponds to the (M+2)^{th} row of lighting channels, ..., the (N-1)^{th} row of receiving channels corresponds to the N^{th} row of lighting channels, and the N^{th} row of receiving channels corresponds to the N^{th} row of lighting channels.

In the foregoing implementation, in the M^{th} to (N-1)^{th} rows of receiving channels, a row sequence number of the receiving channel is less than a row sequence number of a lighting channel corresponding to the receiving channel. This situation is applied to a scenario in which the vertical angle of view of the array transmitter is less than the vertical angle of view of the array receiver. This can improve a matching degree between the vertical angle of view of the lighting channel and the vertical angle of view of the receiving channel, increase energy received by the receiving channel, and resolve the problem of the mismatch between the receiving angle of view and the transmitting angle of view of the flash lidar.

Optionally, multiple adjacent rows of lighting channels in the N rows of lighting channels simultaneously emit light to form a light-emitting region, receiving channels corresponding to the multiple adjacent rows of lighting channels in the N rows of receiving channels form a receiving region, and the receiving region includes multiple adjacent rows of receiving channels.

In the foregoing implementation, when the multiple adjacent rows of lighting channels are simultaneously activated to form the light-emitting region to send the transmit signal outwards, based on the correspondence between the lighting channels and the receiving channels, corresponding receiving channels also form a receiving region to receive the echo signal of the transmit signal.

Optionally, a ratio of a quantity of lighting channels included in the light-emitting region to a quantity of receiving channels included in the receiving region is a first value, and the first value is a ratio of a total quantity of rows of the lighting channels included in the array transmitter to a total quantity of rows of the receiving channels included in the array receiver.

For example, when the first value is 1, it means that the total quantity of rows of the lighting channels included in the array transmitter is equal to the total quantity of rows of the receiving channels included in the array receiver. In other words, although the correspondence between some lighting channels in the array transmitter and some receiving channels in the array receiver has been changed, the quantity of lighting channels included in the light-emitting region may be equal to the quantity of receiving channels included in the receiving region.

Optionally, a first light-emitting region in the array transmitter corresponds to a first receiving region in the array receiver, and the first light-emitting region and the first receiving region satisfy the following condition: A ratio of a quantity of lighting channels included in the first light-emitting region to a quantity of receiving channels included in the first receiving region is greater than a first value; or a ratio of a quantity of lighting channels included in the first light-emitting region to a quantity of receiving channels included in the first receiving region is less than a first value, where the first value is a ratio of a total quantity of rows of the lighting channels included in the array transmitter to a total quantity of rows of the receiving channels included in the array receiver.

In the foregoing implementation, the ratio of the quantity of lighting channels included in the first light-emitting region to the quantity of receiving channels included in the first receiving region is greater than the first value, which indicates that the vertical angle of view of the first light-emitting region is greater than the vertical angle of view of the first receiving region. Therefore, energy emitted by the first light-emitting region increases, and correspondingly, a transmitting angle also expands. This can increase system power, and improve detection performance of the lidar. The ratio of the quantity of lighting channels included in the first light-emitting region to the quantity of receiving channels included in the first receiving region is less than the first value, which indicates that the vertical angle of view of the first receiving region is greater than the vertical angle of view of the first light-emitting region. This can increase energy received by the receiving region, increase system power, and improve detection performance of the lidar.

According to a second aspect, this application provides a detection method, applied to a detection apparatus including an array transmitter and an array receiver, where the array transmitter includes A rows of lighting channels, and the array receiver includes B rows of receiving channels; and the method includes: sequentially sending a transmit signal through S light-emitting regions arranged in a column direction in the array transmitter, and receiving an echo signal of the transmit signal through S receiving regions arranged in a column direction in the array receiver, where an i^{th} light-emitting region in the S light-emitting regions corresponds to an i^{th} receiving region in the S receiving regions;
a ratio of a quantity of lighting channels included in the i^{th} light-emitting region to a quantity of receiving channels included in the i^{th} receiving region is greater than a ratio of A to B, or a ratio of a quantity of lighting channels included in the i^{th} light-emitting region to a quantity of receiving channels included in the i^{th} receiving region is less than a ratio of A to B, where A, B, S, and i are all positive integers, i is less than or equal to S, and S is less than A.

For example, each light-emitting region includes multiple adjacent rows of lighting channels, and the lighting channels in the light-emitting region belong to the A rows of lighting channels.

For example, A is equal to B, or A and B are in a multiple relationship.

In the foregoing method, in the detection apparatus, when the ratio of the quantity of lighting channels included in the light-emitting region of the transmitter to the quantity of receiving channels included in the corresponding receiving region of the receiver is not the ratio of A to B, and the detection apparatus is applied to a scenario in which a vertical angle of view of the array transmitter does not match (that is, is unequal to) a vertical angle of view of the array receiver, system power can be increased, and detection performance of a lidar can also be improved.

Optionally, when the ratio of the quantity of lighting channels included in the i^{th} light-emitting region to the quantity of receiving channels included in the i^{th} receiving region is greater than the ratio of A to B, a same lighting channel is included in any two adjacent light-emitting regions in the S light-emitting regions.

In the foregoing implementation, the ratio of the quantity of lighting channels included in the i^{th} light-emitting region to the quantity of receiving channels included in the i^{th} receiving region is greater than the ratio of A to B, so that a vertical angle of view of the i^{th} light-emitting region is greater than a vertical angle of view of the i^{th} receiving region, energy emitted by the i^{th} light-emitting region increases, and a corresponding transmitting angle also expands. This can increase system power, and improve detection performance of the lidar.

Optionally, when the ratio of the quantity of lighting channels included in the i^{th} light-emitting region to the quantity of receiving channels included in the i^{th} receiving region is less than the ratio of A to B, a same receiving channel is included in any two adjacent receiving regions in the S receiving regions.

In the foregoing implementation, the ratio of the quantity of lighting channels included in the i^{th} light-emitting region to the quantity of receiving channels included in the i^{th} receiving region is less than the ratio of A to B, so that the vertical angle of view of the i^{th} receiving region is greater than the vertical angle of view of the i^{th} light-emitting region, and energy received by the receiving region increases. This can increase system power, and improve detection performance of the lidar.

According to a third aspect, this application provides a detection apparatus, where the detection apparatus includes an array transmitter and an array receiver, the array transmitter is configured to send a transmit signal, the array receiver is configured to receive an echo signal corresponding to the transmit signal, and the detection apparatus is configured to perform the method according to the first aspect or any possible implementation of the first aspect, or perform the method according to the second aspect or any possible implementation of the second aspect.

According to a fourth aspect, this application provides a lidar, where the lidar includes the detection apparatus according to the third aspect.

According to a fifth aspect, this application provides a terminal, where the terminal includes the detection apparatus according to the third aspect, or includes the lidar according to the fourth aspect.

Optionally, the terminal may be a smart terminal or a transportation means such as a vehicle, an uncrewed aerial vehicle, or a robot.

According to a sixth aspect, this application provides a computer-readable storage medium, including computer instructions, where when the computer instructions are run by a processor, the method according to the first aspect or any possible implementation of the first aspect is implemented, or the method according to the second aspect or any possible implementation of the second aspect is implemented.

### BRIEF DESCRIPTION OF DRAWINGS

FIG. 1 is a diagram of an architecture of a detection apparatus according to an embodiment of this application;
FIG. 2 is a diagram of an array transmitter according to an embodiment of this application;
FIG. 3 is a diagram of an array transmitter according to an embodiment of this application;
FIG. 4 is a diagram of a light-emitting region of an array transmitter according to an embodiment of this application;
FIG. 5A is a diagram of a running scenario of a detection apparatus according to an embodiment of this application;
FIG. 5B is a diagram of another running scenario of a detection apparatus according to an embodiment of this application;
FIG. 6 is a diagram of configuration of a detection apparatus without a mismatch between angles of view according to an embodiment of this application;
FIG. 7(1) and FIG. 7(2) are diagrams of distribution of a vertical angle of view of a light-emitting region and a vertical angle of view of a receiving region present when a mismatch exists between angles of view in a detection apparatus according to an embodiment of this application;
FIG. 8(1), FIG. 8(2), and FIG. 8(3) are diagrams of vertical angles of view of some light-emitting regions and vertical angles of view of some receiving regions according to an embodiment of this application;
FIG. 9 is a flowchart of a detection method according to an embodiment of this application;
FIG. 10(1) and FIG. 10(2) are diagrams of a correspondence between lighting channels in a transmitter and receiving channels in a receiver in a detection apparatus according to an embodiment of this application;
FIG. 11(1) and FIG. 11(2) are diagrams of another correspondence between lighting channels in a transmitter and receiving channels in a receiver in a detection apparatus according to an embodiment of this application;
FIG. 12(1) and FIG. 12(2) are diagrams of another correspondence between lighting channels in a transmitter and receiving channels in a receiver in a detection apparatus according to an embodiment of this application;
FIG. 13(1) and FIG. 13(2) are diagrams of another correspondence between lighting channels in a transmitter and receiving channels in a receiver in a detection apparatus according to an embodiment of this application;
FIG. 14(1) and FIG. 14(2) are diagrams of another correspondence between lighting channels in a transmitter and receiving channels in a receiver in a detection apparatus according to an embodiment of this application;
FIG. 15(1) and FIG. 15(2) are diagrams of another correspondence between lighting channels in a transmitter and receiving channels in a receiver in a detection apparatus according to an embodiment of this application;
FIG. 16 is a flowchart of another detection method according to an embodiment of this application;
FIG. 17 is a diagram of a correspondence between lighting channels of a light-emitting region in a transmitter and receiving channels of a receiving region in a receiver according to an embodiment of this application; and
FIG. 18 is a diagram of a correspondence between lighting channels of a light-emitting region in a transmitter and receiving channels of a receiving region in a receiver according to an embodiment of this application.

### DESCRIPTION OF EMBODIMENTS

It should be noted that prefix words such as "first" and "second" used in this application are merely used to distinguish between different described objects, and do not limit positions, a sequence, a priority, quantities, content, or the like of the described objects. For example, if the described objects are "fields", ordinal numbers before "field" in a "first field" and a "second field" do not limit positions or a sequence of the "fields", and "first" and "second" do not limit whether the modified "fields" are in a same message, and do not limit a sequence of the "first field" and the "second field". For another example, if the described objects are "levels", ordinal numbers before "level" in a "first level" and a "second level" do not limit a priority between the "levels". For another example, a quantity of described objects is not limited by a prefix word, and may be one or more. A "first device" is used as an example, where a quantity of "devices" may be one or more. In addition, objects modified by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In conclusion, use of a prefix word used to distinguish between the described objects in embodiments of this application does not constitute a limitation on the described objects. For descriptions of the described objects, reference is made to the context descriptions in the claims or embodiments, and the use of such a prefix word should not constitute a redundant limitation.

It should be noted that, in embodiments of this application, a description like "at least one (or at least one piece) of a1, a2, ..., and an" is used, including a case in which any one of a1, a2, ..., and an exists alone, and also including a case of any combination of any plurality of a1, a2, ..., and an. Each case may exist alone. For example, a description of "at least one of a, b, and c" includes a case of a single a, a single b, a single c, a combination of a and b, a combination of a and c, a combination of b and c, or a combination of a, b, and c.

The following describes technical solutions of this application with reference to accompanying drawings.

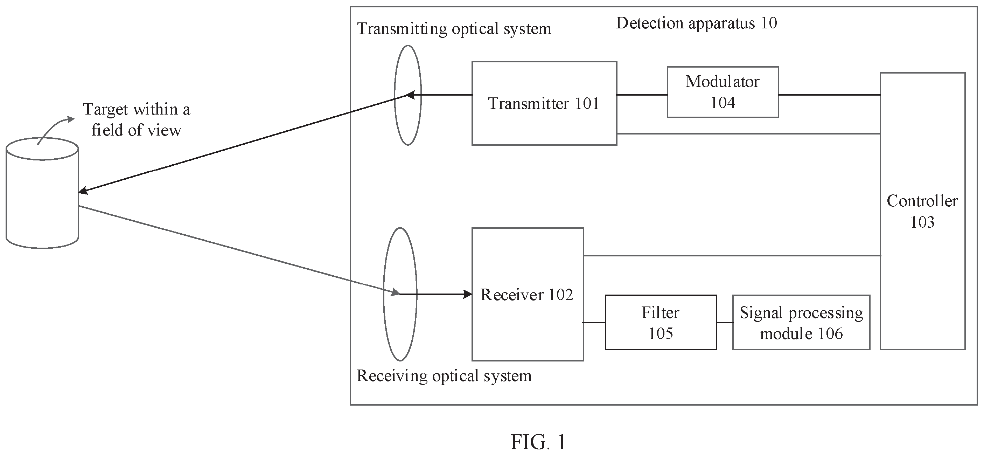

FIG. 1 is a diagram of a structure of a possible detection apparatus according to an embodiment of this application. The detection apparatus 10 includes a transmitter 101 and a receiver 102. Optionally, the detection apparatus 10 further includes one or more of a controller 103, a modulator 104, a filter 105, a signal processing module 106, and the like. Multiple modules of the detection apparatus may be connected in a wired and/or wireless manner. The following describes the modules by using examples.
(1) The transmitter 101 is configured to generate a laser signal. For example, the transmitter 101 may include a laser diode (laser diode, LD), a vertical cavity surface emitting laser (vertical cavity surface emitting laser, VCSEL), a photonic crystal surface emitting laser (photonic crystal surface emitting semiconductor laser, PCSEL), an edge emitting laser (edge emitting laser, EEL), a distributed feedback laser diode (distributed feedback LD, DFB-LD), a grating-coupled sampling reflection laser diode (Grating-coupled sampling reflection LD, GCSR-LD), a micro-opto-electro-mechanical system laser diode (micro-opto-electro-mechanical system LD, MOEMS-LD), or another type of light-emitting element.

An optical signal transmitted by the transmitter 101 may be directed into a detection region (the detection region is a real region in a field of view) through a transmitting optical system.

Optionally, when the transmitter 101 includes multiple light-emitting elements, the multiple light-emitting elements may be arranged in an array. In this case, the transmitter may be referred to as an array transmitter (or referred to as a flash transmitter). A rule of the array is not limited in embodiments of this application. In a specific implementation process, the array transmitter may be, for example, a 1×10 array, a 2×5 array, or an 8×9 array.

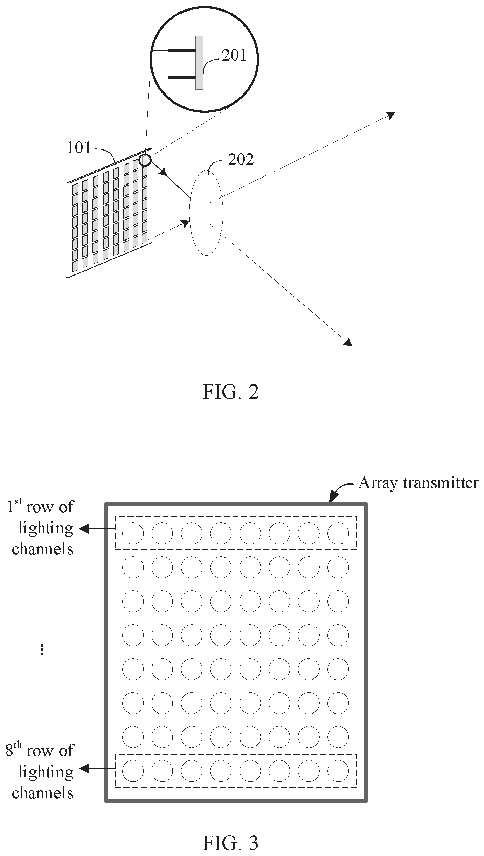

FIG. 2 is a diagram of a possible array transmitter according to an embodiment of this application. The transmitter 101 includes an 8×8 array light source formed by 64 light-emitting elements. In FIG. 2, each small square in the transmitter 101 represents one light-emitting element 201. During transmission, one or more light-emitting elements in the transmitter 101 emit an optical signal, and the optical signal is directed into a field of view through a transmitting optical system 202.

Based on an activating manner (or referred to as a lighting manner) of the transmitter, the array transmitter includes multiple rows of lighting channels (that is, activated in a row-by-row manner) or multiple columns of lighting channels (that is, activated in a column-by-column manner). FIG. 3 is a diagram of a possible array transmitter according to an embodiment of this application. It can be learned from FIG. 3 that the array transmitter includes eight rows of lighting channels: a 1^{st} row of lighting channels (hereinafter referred to as lighting channels 1 for short, where "1" represents a row sequence number of the lighting channels), a 2^{nd} row of lighting channels (referred to as lighting channels 2 for short), ..., and an 8^{th} row of lighting channels (referred to as lighting channels 8 for short), and each row of lighting channels includes corresponding light-emitting elements. Each circle in FIG. 3 may be, for example, represented as one light-emitting element, or may be represented as multiple light-emitting elements arranged in an array. For example, in FIG. 3, if each circle represents a 2*2 array of light-emitting elements, each row of lighting channels includes a 2*16 array of light-emitting elements. A quantity of light-emitting elements included in the lighting channel is not specifically limited in embodiments of this application.

In a column direction in the array transmitter, multiple adjacent rows of lighting channels simultaneously emit light to form a light-emitting region, that is, each light-emitting region includes two rows and more than two rows of adjacent lighting channels.

For example, the array transmitter includes multiple light-emitting regions. The multiple light-emitting regions are sequentially arranged in the column direction in the array transmitter. A laser signal emitted by each light-emitting region is directed into the field of view through the transmitting optical system.

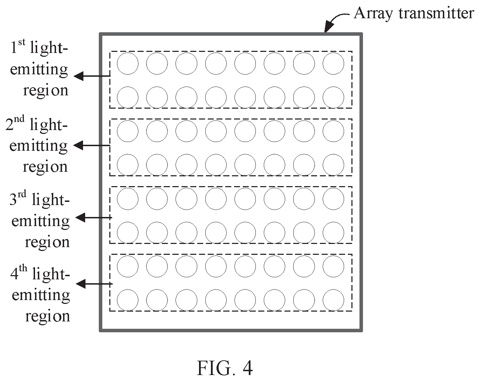

FIG. 4 is a diagram of a light-emitting region of an array transmitter according to an embodiment of this application. It is assumed that, in a column direction in the array transmitter, two rows of lighting channels are simultaneously activated each time, and no same lighting channel exists in lighting channels activated in two consecutive activation operations. In this case, the array transmitter shown in FIG. 3 includes four light-emitting regions. As shown in FIG. 4, the four light-emitting regions are sequentially arranged in the column direction in the array transmitter, each light-emitting region includes two adjacent rows of lighting channels, and no same lighting channel exists in any two adjacent light-emitting regions. For example, a 1^{st} light-emitting region in FIG. 4 is denoted as a light-emitting region 1, and the light-emitting region 1 includes the lighting channel 1 and the lighting channel 2. Correspondingly, a light-emitting region 2 includes the lighting channel 3 and the lighting channel 4, a light-emitting region 3 includes the lighting channel 5 and the lighting channel 6, and a light-emitting region 4 includes the lighting channel 7 and the lighting channel 8.

Here, FIG. 4 is merely an example of a light-emitting region of the array transmitter, and a quantity of light-emitting regions in the array transmitter and a quantity of lighting channels included in the light-emitting region are not limited to be merely as shown in FIG. 4. Whether quantities of lighting channels included in different light-emitting regions are the same depends on whether quantities of lighting channels simultaneously activated each time are the same.

In some possible embodiments, a same lighting channel may be included in two adjacent light-emitting regions. For example, the lighting channel 1 and the lighting channel 2 are activated for the first time to form the light-emitting region 1, the lighting channel 2 and the lighting channel 3 are activated for the second time to form the light-emitting region 3, and the lighting channel 3 and the lighting channel 4 are activated for the third time, ... In this way, seven light-emitting regions can be formed based on the array transmitter shown in FIG. 3.

(2) The receiver 102 is configured to receive an optical signal. Further, the receiver 102 can obtain an electrical signal based on the optical signal.

For example, the receiver 102 may include a single-photon avalanche diode (single-photon avalanche diode, SPAD), a silicon photomultiplier (Silicon photomultiplier, SiPM), a semiconductor avalanche photodiode (avalanche photo detector, APD), a multi-pixel photon counter (multi-pixel photon counter, MPPC), or an electron multiplying charge-coupled device (electron multiplying charge-coupled device, EMCCD), or another type of detection element.

An optical signal directed into the detection region through the transmitting optical system strikes a target object, and then interacts with the target object to form a reflected/scattered echo beam. After being collected by the receiving optical system, the echo beam is received by the receiver 102 and is converted into the electrical signal.

Optionally, when the receiver includes multiple detection elements, the multiple detection elements may be arranged in an array. In this case, the receiver may also be referred to as an array receiver (or referred to as an array detector). For example, the array may be a 1×10 array or a 20×10 array. A quantity of rows and a quantity of columns arranged in the array are not limited in this application. In a possible implementation, the receiver 102 may be specifically an SPAD array, an SiPM array, or the like.

For example, when the transmitter 101 includes multiple rows of lighting channels, the receiver 102 includes multiple rows of receiving channels; or when the transmitter 101 includes multiple columns of lighting channels, the receiver 102 includes multiple columns of receiving channels.

Here, an example in which the transmitter 101 includes multiple rows of lighting channels and the receiver 102 includes multiple rows of receiving channels is used. There is a correspondence between the lighting channels in the transmitter and the receiving channels in the transmitter. The correspondence is associated with a total quantity of rows of the lighting channels of the transmitter and a total quantity of rows of the receiving channels of the receiver. The correspondence may be, for example, a one-to-one, one-to-many, or many-to-one correspondence. This is not specifically limited herein.

In an implementation, the total quantity of rows of the lighting channels of the transmitter is the same as the total quantity of rows of the receiving channels of the receiver. In another implementation, the total quantity of rows of the lighting channels of the transmitter is in a multiple relationship with the total quantity of rows of the receiving channels of the receiver.

In an example, the transmitter includes 90 rows of lighting channels and the receiver includes 90 rows of receiving channels, a vertical angle of view of the transmitter and a vertical angle of view of the receiver are each 90 degrees, and a vertical angle of view of each row of lighting channels is 1 degree and a vertical angle of view of each row of receiving channels is 1 degree. In this case, one row of lighting channels of the transmitter corresponds to one row of receiving channels of the receiver. For example, a 1^{st} row of lighting channels of the transmitter corresponds to a 1^{st} row of receiving channels of the receiver, a 2^{nd} row of lighting channels of the transmitter corresponds to a 2^{nd} row of receiving channels of the receiver, ..., and a 90^{th} row of lighting channels of the transmitter corresponds to a 90^{th} row of receiving channels of the receiver.

In another example, the transmitter includes 45 rows of lighting channels and the receiver includes 90 rows of receiving channels, a vertical angle of view of the transmitter and a vertical angle of view of the receiver are each 90 degrees, and a vertical angle of view of each row of lighting channels is 2 degrees and a vertical angle of view of each row of receiving channels is 1 degree. In this case, one row of lighting channels of the transmitter corresponds to two rows of receiving channels of the receiver. For example, a 1^{st} row of lighting channels of the transmitter corresponds to 1^{st} and 2^{nd} rows of receiving channels of the receiver, a 2^{nd} row of lighting channels of the transmitter corresponds to 2^{nd} and 3^{rd} rows of receiving channels of the receiver, ..., and a 45^{th} row of lighting channels of the transmitter corresponds to 89^{th} and 90^{th} rows of receiving channels of the receiver.

Because there is a correspondence between the lighting channels of the transmitter and the receiving channels of the receiver, when multiple adjacent rows of lighting channels simultaneously emit light to form a light-emitting region, receiving channels corresponding to the multiple adjacent rows of lighting channels correspondingly form a receiving region, and the receiving region includes one row of receiving channels or multiple adjacent rows of receiving channels. The receiving region is used to receive an echo signal of a laser signal emitted by the light-emitting region. That is, the light-emitting region of the transmitter is in a one-to-one correspondence with the receiving region of the receiver.

For example, when the array transmitter includes multiple light-emitting regions and the multiple light-emitting regions are sequentially arranged in the column direction in the array transmitter, the array receiver includes multiple receiving regions, and the multiple receiving regions are sequentially arranged in a column direction in the array receiver.

Here, for the receiving channel, the receiving region, and the like of the array receiver, reference can similarly be made to the foregoing descriptions of the lighting channel of the array transmitter shown in FIG. 3 and the light-emitting region of the array transmitter shown in FIG. 4. For brevity of the specification, details are not described herein again.

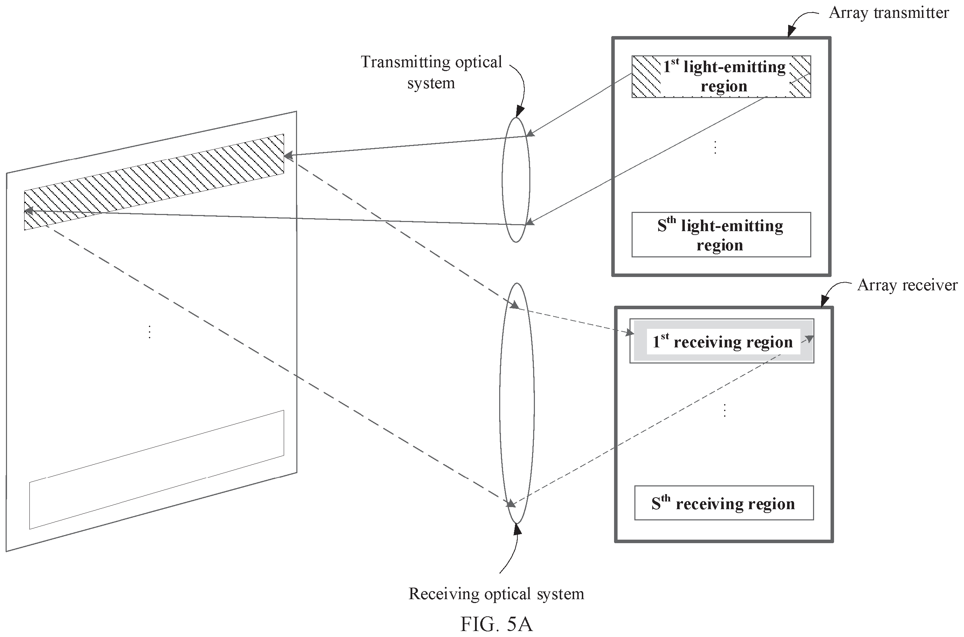

FIG. 5A is a diagram of a running scenario of a detection apparatus according to an embodiment of this application. A transmitter in the detection apparatus is an array transmitter. It can be learned from FIG. 5A that, the array transmitter has S (S is a positive integer) light-emitting regions sequentially arranged in a column direction in the array transmitter, the array receiver has S receiving regions sequentially arranged in a column direction in the array receiver, and an i^{th} light-emitting region corresponds to an i^{th} receiving region, where i is an integer from 1 to S. The i^{th} light-emitting region of the array transmitter emits a transmit signal, and correspondingly, the i^{th} receiving region of the array receiver receives an echo signal of the transmit signal. Here, the running scenario of the detection apparatus shown in FIG. 5A is merely used as an example, in which the array transmitter in the detection apparatus is not limited to run only in a row-by-row activation manner.

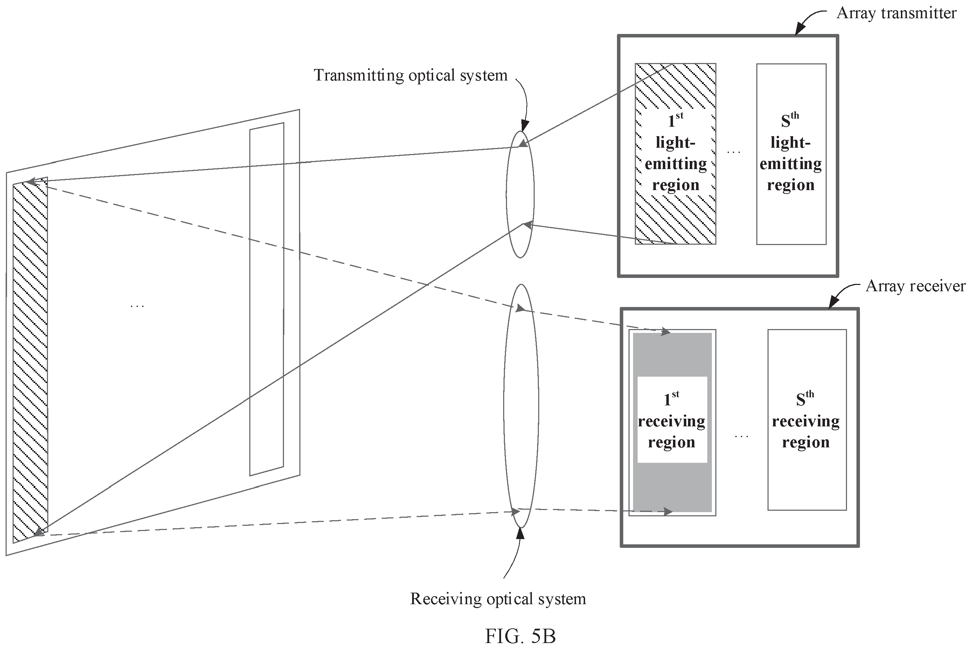

FIG. 5B is a diagram of another running scenario of a detection apparatus according to an embodiment of this application. A transmitter in the detection apparatus is an array transmitter. It can be learned from FIG. 5B that, the array transmitter has S light-emitting regions sequentially arranged in a row direction in the array transmitter, the array receiver has S receiving regions sequentially arranged in a row direction in the array receiver, and an i^{th} light-emitting region corresponds to an i^{th} receiving region, where i is an integer from 1 to S. The array transmitter in the detection apparatus shown in FIG. 5B runs in a column-by-column activation manner.

(3) The controller is configured to generate a control signal to control another module to complete a function of the module.

For example, the controller can perform gating on some detection elements in the array receiver by using the control signal, and the gated detection elements can obtain an electrical signal based on an optical signal.

For another example, the controller can control, by using the control signal, some light-emitting elements in the array transmitter to emit light at a specific moment.

Optionally, the filter, the signal processing module, and the like are all configured to process a received echo signal. For example, the filter includes but is not limited to a finite impulse response (finite impulse response, FIR) filter, an infinite impulse response (infinite impulse response, IIR) filter, a low-pass filter, a band-pass filter, or the like. For example, processing performed by the signal processing module on the signal includes but is not limited to one or more of analog-to-digital conversion, time-to-digital conversion, signal detection, TOF extraction, distance compensation, reflectivity compensation, or the like.

In addition, the detection apparatus includes one or more optical elements, such as a receiving optical system and a transmitting optical system shown in FIG. 4. The optical element includes but is not limited to a collimating lens, a lens, an optical filter, a beam splitter, a diffuser, a reflector, a rotating mirror, an oscillating mirror, a micromirror, or the like. A quantity, placement positions, or the like of optical elements is not limited in this application.

In this embodiment of this application, the solution is described by using an example in which the array transmitter runs in a row-by-row activation manner (as shown in FIG. 5A). In this case, the mismatch between a receiving angle of view and a transmitting angle of view means that a vertical angle of view of the array transmitter mismatches a vertical angle of view of the array receiver. However, this embodiment of this application is not limited to be merely applicable to the running scenario shown in FIG. 5A, for example, is also applicable to a scenario in which the array transmitter runs in a column-by-column activation manner (as shown in FIG. 5B). In this case, the mismatch between a receiving angle of view and a transmitting angle of view means that a horizontal angle of view of the array transmitter mismatches a horizontal angle of view of the array receiver.

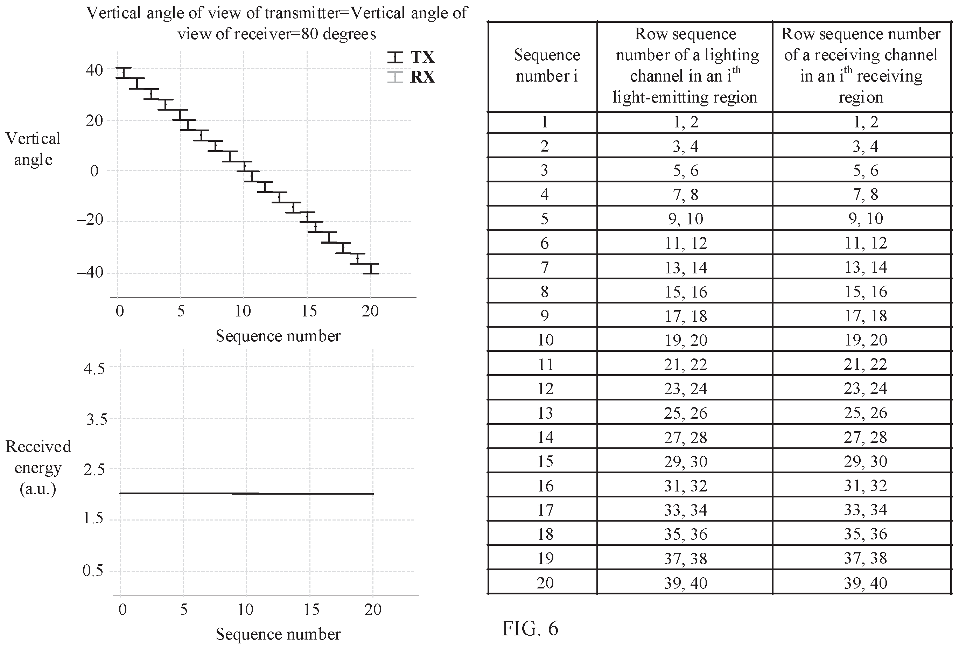

Before the detection method provided in an embodiment of this application is described, the correspondence between the lighting channels of the array transmitter and the receiving channels of the array receiver when there is no mismatch (that is, TX_FOV=RX_FOV) between the vertical angle of view of the array transmitter (denoted as TX_FOV) and the vertical angle of view of the array receiver (denoted as RX_FOV) is described first. For the correspondence, refer to, for example, FIG. 6.

FIG. 6 is a diagram of configuration of a detection apparatus without a mismatch between angles of view according to an embodiment of this application. In FIG. 6, an example in which the array transmitter includes 40 rows of lighting channels and the array receiver includes 40 rows of receiving channels is used. It is assumed that the vertical angle of view of the array transmitter matches the vertical angle of view of the array receiver, for example, TX_FOV=RX_FOV=80 degrees. In this case, a vertical angle of view of each row of lighting channels is the same as a vertical angle of view of each row of receiving channels, each of which is 2 degrees. It can be seen that the correspondence between the lighting channels of the array transmitter and the receiving channels of the array receiver is a one-to-one correspondence, specifically including: A 1^{st} row of lighting channels corresponds to a 1^{st} row of receiving channels, a 2^{nd} row of lighting channels corresponds to a 2^{nd} row of receiving channels, ..., and a 40^{th} row of lighting channels corresponds to a 40^{th} row of receiving channels.

Further, it is assumed that the array transmitter activates two rows of lighting channels each time in the column direction to form a light-emitting region, and similarly, the array receiver correspondingly has two rows of receiving channels each time in the column direction to form a receiving region. It can be learned from the mapping table shown in FIG. 6 that no same lighting channel exists in lighting channels activated in two consecutive activation operations. To implement detection of a vertical angle of view of 80 degrees, the array transmitter has 20 light-emitting regions and the array receiver has 20 receiving regions. A vertical angle of view of each light-emitting region is 4 degrees, and a vertical angle of view of each receiving region is 4 degrees. For a correspondence between row sequence numbers of the lighting channels in the light-emitting region and row sequence numbers of the receiving channels in the receiving region, reference is made to the mapping table shown in FIG. 6. The mapping table shows a sequence number i, a row sequence number of a lighting channel in an i^{th} light-emitting region, and a row sequence number of a receiving channel in an i^{th} receiving region. The correspondence "1-(1, 2)-(1, 2)" is used as an example, which indicates that a 1^{st} light-emitting region includes a 1^{st} row of lighting channels and a 2^{nd} row of lighting channels, and a 1^{st} receiving region includes a 1^{st} row of receiving channels and a 2^{nd} row of receiving channels.

The mapping table shown in FIG. 6 is merely an example. In some possible embodiments, when a quantity of lighting channels that are simultaneously activated each time is 2, a same lighting channel is included in two adjacent light-emitting regions. For example, the correspondence "2-(3, 4)-(3, 4)" in the mapping table shown in FIG. 6 may be changed to a correspondence "2-(2, 3)-(2, 3)". That is, the correspondence indicates that a 2^{nd} light-emitting region includes a 2^{nd} row of lighting channels and a 3^{rd} row of lighting channels, and a 2^{nd} receiving region includes a 2^{nd} row of receiving channels and a 3^{rd} row of receiving channels. In some possible embodiments, when a quantity of lighting channels that are simultaneously activated each time is 3, 4, or another value, compared with the mapping table shown in FIG. 6, a quantity of lighting channels in the light-emitting region and row sequence numbers of the lighting channels change. Correspondingly, a quantity of receiving channels in the corresponding receiving region and row sequence numbers of the receiving channels change, and a quantity of light-emitting regions may change.

It is assumed that energy of each lighting channel is 1 and is evenly distributed in angular space, if a reflectivity of a target is a, because the vertical angle of view of the array transmitter does not mismatch the vertical angle of view of the array receiver, it can be learned from a two-dimensional plane diagram between a sequence number and received energy shown in FIG. 6 that received energy of each receiving region can be stably maintained at 2a.

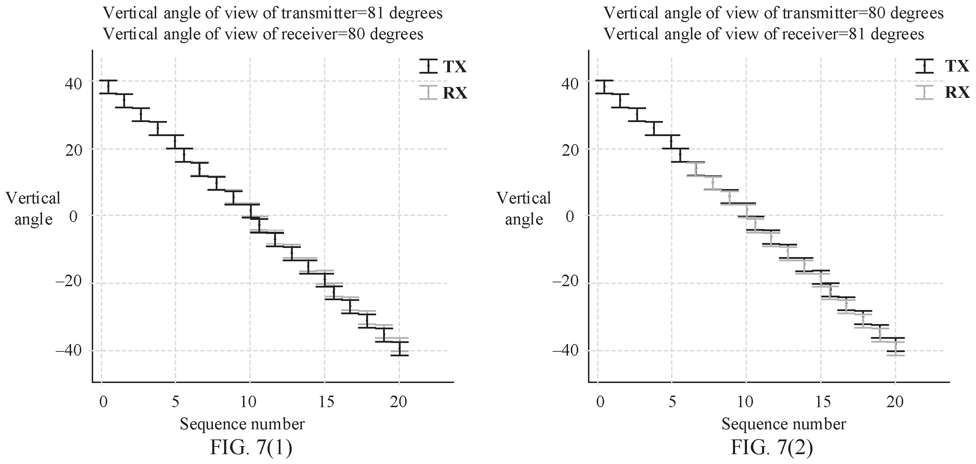

In addition, it can be learned from a two-dimensional plane diagram between a sequence number and a vertical angle shown in FIG. 6 that a vertical angle of view of each light-emitting region is the same as a vertical angle of view of each receiving region, each of which is 4 degrees. Therefore, distribution of the TX (representing the transmitter) in the vertical angle completely overlaps with distribution of the RX (representing the receiver) in the vertical angle, and a vertical angle of view of each light-emitting region completely matches a vertical angle of view of a receiving region corresponding to the light-emitting region. Based on configuration of the mapping table shown in FIG. 6, when the vertical angle of view of the transmitter is greater than the vertical angle of view of the receiver (for example, the vertical angle of view of the transmitter is 81 degrees, and the vertical angle of view of the receiver is 80 degrees), the two-dimensional plane diagram between the sequence number and the vertical angle may be as shown in, for example, FIG. 7(1). It can be learned that distribution of the TX in the vertical angle does not completely overlap with distribution of the RX in the vertical angle, and with the increase of the sequence number i, a difference between a vertical angle of view of the i^{th} light-emitting region and a vertical angle of view of the i^{th} receiving region is increasingly large. Based on configuration of the mapping table shown in FIG. 6, when the vertical angle of view of the transmitter is less than the vertical angle of view of the receiver (for example, the vertical angle of view of the transmitter is 80 degrees, and the vertical angle of view of the receiver is 81 degrees), the two-dimensional plane diagram between the sequence number and the vertical angle may be as shown in, for example, FIG. 7(2). It can be learned that distribution of the TX in the vertical angle does not completely overlap with distribution of the RX in the vertical angle, and with the increase of the sequence number i, a difference between a vertical angle of view of the i^{th} light-emitting region and a vertical angle of view of the i^{th} receiving region is increasingly large.

Regardless of whether the vertical angle of view of the transmitter is greater than the vertical angle of view of the receiver or the vertical angle of view of the transmitter is less than the vertical angle of view of the receiver, both cases belong to mismatch between the vertical angle of view of the transmitter and the vertical angle of view of the receiver, which causes received energy attenuation in at least some receiving regions in the multiple receiving regions of the receiver.

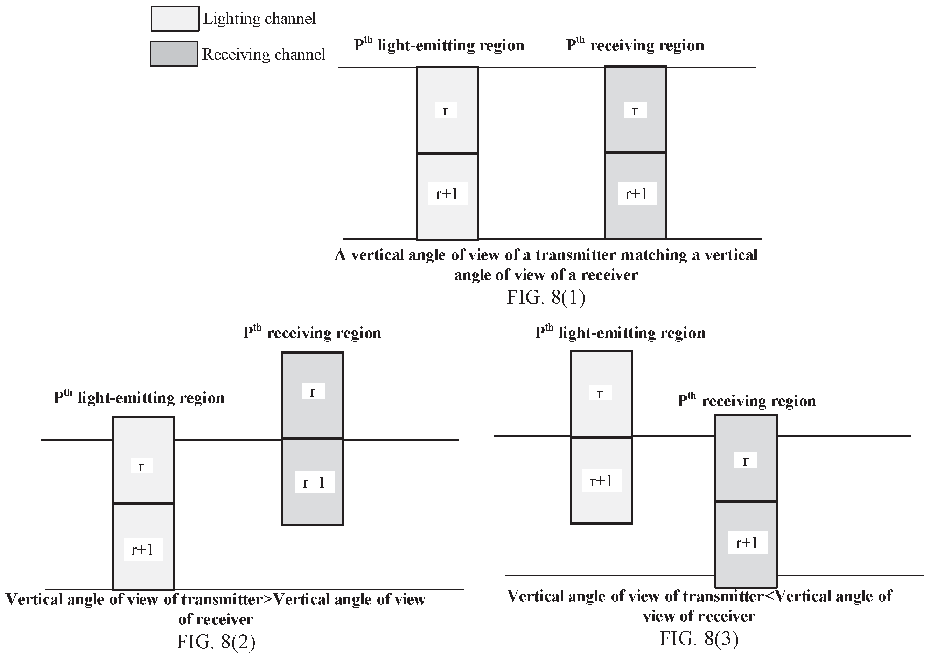

For a correspondence between a vertical angle of view of the light-emitting region and a vertical angle of view of the receiving region, refer to FIG. 8(1), FIG. 8(2), and FIG. 8(3). FIG. 8(1), FIG. 8(2), and FIG. 8(3) are diagrams of vertical angles of view of some light-emitting regions and vertical angles of view of some receiving regions according to an embodiment of this application. In FIG. 8(1), FIG. 8(2), and FIG. 8(3), based on the configuration of the mapping table shown in FIG. 6, an example of i=P is used, and a P^{th} light-emitting region corresponds to a P^{th} receiving region, the P^{th} light-emitting region includes an r^{th} row of lighting channels and an (r+1)^{th} row of lighting channels, and the P^{th} receiving region includes an r^{th} row of receiving channels and an (r+1)^{th} row of receiving channels. FIG. 8(1) shows a correspondence between a vertical angle of view of the P^{th} light-emitting region and a vertical angle of view of the P^{th} receiving region present when the vertical angle of view of the transmitter matches the vertical angle of view of the receiver; FIG. 8(2) shows a correspondence between a vertical angle of view of the P^{th} light-emitting region and a vertical angle of view of the P^{th} receiving region present when the vertical angle of view of the transmitter is greater than the vertical angle of view of the receiver; and FIG. 8(3) shows a correspondence between a vertical angle of view of the P^{th} light-emitting region and a vertical angle of view of the P^{th} receiving region present when the vertical angle of view of the transmitter is less than the vertical angle of view of the receiver. Both FIG. 8(2) and FIG. 8(3) cause received energy of the P^{th} receiving region to be lower than an energy lower limit value, thereby affecting detection performance of a lidar.

For example, when the vertical angle of view of the transmitter does not match the vertical angle of view of the receiver, it is assumed that based on the configuration of the mapping table shown in FIG. 6, it is determined through a use test of the lidar that, starting from i=P, energy of an echo signal received by the i^{th} receiving region is less than the energy lower limit value. For this problem, based on a central idea of changing a correspondence between some lighting channels in the array transmitter and some receiving channels in the array receiver, this embodiment of this application provides multiple compensation schemes:
Compensation scheme 1: Adjust a gating timing of the receiving channels;
compensation scheme 2: Adjust an activation timing of the lighting channels;
compensation scheme 3: Increase a quantity of lighting channels that are simultaneously activated; and
compensation scheme 4: Increase a quantity of receiving channels that are simultaneously enabled.

Based on compensation scheme 1 or compensation scheme 2 described above, when receive-transmit mismatch reaches a specific degree, a matching degree between the vertical angle of view of the light-emitting region and the vertical angle of view of the corresponding receiving region can be improved as much as possible, so that received energy of the receiving region can be increased. Based on compensation scheme 3 described above, it can be ensured that a transient vertical angle of view of the array transmitter is greater than a transient vertical angle of view of the array receiver, and in this case, the light-emitting region of the array transmitter emits more energy, and a corresponding transmitting angle also expands. Although a problem of mismatch still exists, system power can be increased, and detection performance of the lidar can be improved. Based on compensation scheme 4 described above, it can be ensured that a transient vertical angle of view of the array receiver is greater than a transient vertical angle of view of the array transmitter, and the vertical angle of view of the receiving region of the array receiver becomes larger, which can increase system power, and improve detection performance of the lidar.

The following specifically describes application of the foregoing compensation schemes.

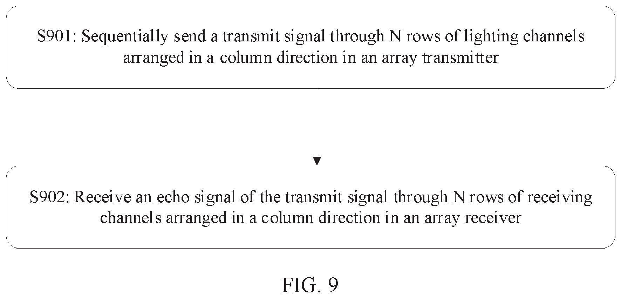

FIG. 9 is a flowchart of a detection method according to an embodiment of this application. The method is applied to a detection apparatus (for example, the detection apparatus 10 shown in FIG. 1) that includes an array transmitter and an array receiver. The array transmitter includes multiple rows of lighting channels, and the array receiver includes multiple rows of receiving channels. The method includes but is not limited to the following steps.

S901: Sequentially send a transmit signal through N rows of lighting channels arranged in a column direction in the array transmitter.

For example, the N rows of lighting channels may be some lighting channels in multiple rows of lighting channels in the array transmitter.

For example, if a total quantity of rows of lighting channels included in the array transmitter is A, N is less than or equal to A, and N is a positive integer greater than 2.

In an implementation, sequentially sending the transmit signal through the N rows of lighting channels arranged in the column direction in the array transmitter includes: sequentially activating one row of lighting channels or multiple adjacent rows of lighting channels in the N rows of lighting channels in the column direction in the array transmitter to send the transmit signal. For example, "sequentially" is understood as activating the lighting channels in a preset sequence.

For example, for sequentially activating the one row of lighting channels in the N rows of lighting channels, refer to an activating manner 1 to an activating manner 3 described below:
Activating manner 1:
   A 1^{st} row of lighting channels is activated for the first time, a 2^{nd} row of lighting channels is activated for the second time, ..., and an N^{th} row of lighting channels is activated for the N^{th} time.
Activating manner 2:
   A 1^{st} row of lighting channels is activated for the first time, a 2^{nd} row of lighting channels is activated for the second time, ..., a j^{th} row of lighting channels is activated for the j^{th} time, the j^{th} row of lighting channels is activated for the (j+1)^{th} time, a (j+1)^{th} row of lighting channels is activated for the (j+2)^{th} time, ..., and an N^{th} row of lighting channels is activated for the (N+1)^{th} time.
   It can be seen that, in the activating manner 2, when the lighting channels are sequentially activated, a row (for example, the j^{th} row) of lighting channels may be continuously activated for multiple times.
Activating manner 3:
   A 1^{st} row of lighting channels is activated for the first time, a 2^{nd} row of lighting channels is activated for the second time, ..., a (j-1)^{th} row of lighting channels is activated for the (j-1)^{th} time, a (j+1)^{th} row of lighting channels is activated for the j^{th} time, a (j+2)^{th} row of lighting channels is activated for the (j+1)^{th} time, ..., and an N^{th} row of lighting channels is activated for the (N-1)^{th} time.
   It can be seen that, in the activating manner 3, when the N rows of lighting channels are sequentially activated, a row (for example, the j^{th} row) of lighting channels may be skipped and not be activated.
   For example, for sequentially activating the multiple adjacent rows of lighting channels in the N rows of lighting channels, refer to an activating manner 1 to an activating manner 4:
Activating manner 1:
   1^{st} and 2^{nd} rows of lighting channels are simultaneously activated for the first time, 3^{rd} and 4^{th} rows of lighting channels are simultaneously activated for the second time, 5^{th} and 6^{th} rows of lighting channels are simultaneously activated for the third time, ..., (2j-1)^{th} and 2j^{th} rows of lighting channels are simultaneously activated for the j^{th} time, ..., and so on, until an N^{th} row of lighting channels is activated. Here, a quantity of lighting channels that are activated each time is not limited to 2, and may be 3, 4, or another value.
   In other words, in the activating manner 1, multiple adjacent rows of lighting channels are simultaneously activated each time and no same lighting channel exists in lighting channels activated in two consecutive activation operations.
Activating manner 2:
   1^{st}, 2^{nd}, and 3^{rd} rows of lighting channels are simultaneously activated for the first time, 2^{nd}, 3^{rd}, and 4^{th} rows of lighting channels are simultaneously activated for the second time, 3^{rd}, 4^{th}, and 5^{th} rows of lighting channels are simultaneously activated for the third time, ..., j^{th}, (j+1)^{th}, and (j+2)^{th} rows of lighting channels are simultaneously activated for the j^{th} time, ..., and so on, until an N^{th} row of lighting channels is activated.
   In other words, in the activating manner 2, multiple adjacent rows of lighting channels are simultaneously activated each time and a same lighting channel exists in lighting channels activated in two consecutive activation operations.
Activating manner 3:
   1^{st} and 2^{nd} rows of lighting channels are simultaneously activated for the first time, 3^{rd} and 4^{th} rows of lighting channels are simultaneously activated for the second time, 5^{th} and 6^{th} rows of lighting channels are simultaneously activated for the third time, ..., (2j-1)^{th} and 2j^{th} rows of lighting channels are simultaneously activated for the j^{th} time, 2j^{th} and (2j+1)^{th} rows of lighting channels are simultaneously activated for the (j+1)^{th} time, (2j+2)^{th} and (2j+3)^{th} rows of lighting channels are simultaneously activated for the (j+2)^{th} time, ..., and so on, until an N^{th} row of lighting channels is activated.
   It can be seen that, in the activating manner 3, when the lighting channels are sequentially activated, a row (for example, the 2j^{th} row) of lighting channels may be continuously activated for multiple times.
Activating manner 4:
   1^{st} and 2^{nd} rows of lighting channels are simultaneously activated for the first time, 3^{rd} and 4^{th} rows of lighting channels are simultaneously activated for the second time, 5^{th} and 6^{th} rows of lighting channels are simultaneously activated for the third time, ..., (2j-1)^{th} and 2j^{th} rows of lighting channels are simultaneously activated for the j^{th} time, (2j+2)^{th} and (2j+3)^{th} rows of lighting channels are simultaneously activated for the (j+1)^{th} time, (2j+4)^{th} and (2j+5)^{th} rows of lighting channels are simultaneously activated for the (j+2)^{th} time, ..., and so on, until an N^{th} row of lighting channels is activated.

It can be seen that, in the activating manner 4, when the lighting channels are sequentially activated, a row (for example, a (2j+1)^{th} row) of lighting channels may be skipped and not be activated. Here, it is not required that only one row of lighting channels can be skipped and not be activated. In some possible embodiments, multiple consecutive rows of lighting channels may be skipped and not be activated.

In an implementation, in the N rows of lighting channels, multiple adjacent rows of lighting channels simultaneously emit light (that is, are simultaneously activated) to form a light-emitting region, that is, the light-emitting region includes the multiple adjacent rows of lighting channels.

S902: Receive an echo signal of the transmit signal through N rows of receiving channels arranged in a column direction in the array receiver.

In this embodiment of this application, because there is a correspondence between a lighting channel in the array transmitter and a receiving channel in the array receiver, when the transmit signal is sent through the lighting channel in the array transmitter, the echo signal of the transmit signal is correspondingly received through a receiving channel, corresponding to the lighting channel, in the array receiver.

In an implementation, a correspondence between 1^{st} to (M-1)^{th} rows of lighting channels in the column direction in the array transmitter and a receiving channel in the column direction in the array receiver is different from a correspondence between M^{th} to N^{th} rows of lighting channels and the receiving channel in the column direction in the array receiver, where both M and N are positive integers greater than 2, and M is less than N.

In an example, the correspondence between the 1^{st} to (M-1)^{th} rows of lighting channels and the receiving channel in the column direction in the array receiver being different from the correspondence between the M^{th} to N^{th} rows of lighting channels and the receiving channel in the column direction in the array receiver includes: The 1^{st} to (M-1)^{th} rows of lighting channels respectively correspond to 1^{st} to (M-1)^{th} rows of receiving channels in the N rows of receiving channels; and the M^{th} to N^{th} rows of lighting channels respectively correspond to (M+1)^{th} to N^{th} rows of receiving channels in the N rows of receiving channels.

For example, that the 1^{st} to (M-1)^{th} rows of lighting channels respectively correspond to the 1^{st} to (M-1)^{th} rows of receiving channels in the N rows of receiving channels includes: The 1^{st} to (M-1)^{th} rows of lighting channels are in a one-to-one correspondence with the 1^{st} to (M-1)^{th} rows of receiving channels, to be specific, the 1^{st} row of lighting channels corresponds to the 1^{st} row of receiving channels, the 2^{nd} row of lighting channels corresponds to the 2^{nd} row of receiving channels, ..., the j^{th} row of lighting channels corresponds to the j^{th} row of receiving channels, ..., the (M-1)^{th} row of lighting channels corresponds to the (M-1)^{th} row of receiving channels. That the M^{th} to N^{th} rows of lighting channels respectively correspond to the (M+1)^{th} to N^{th} rows of receiving channels in the N rows of receiving channels includes: The M^{th} row of lighting channels corresponds to the (M+1)^{th} row of receiving channels, the (M+1)^{th} row of lighting channels corresponds to the (M+2)^{th} row of receiving channels, ..., the (N-1)^{th} row of lighting channels corresponds to the N^{th} row of receiving channels, and the N^{th} row of lighting channels corresponds to the N^{th} row of receiving channels.

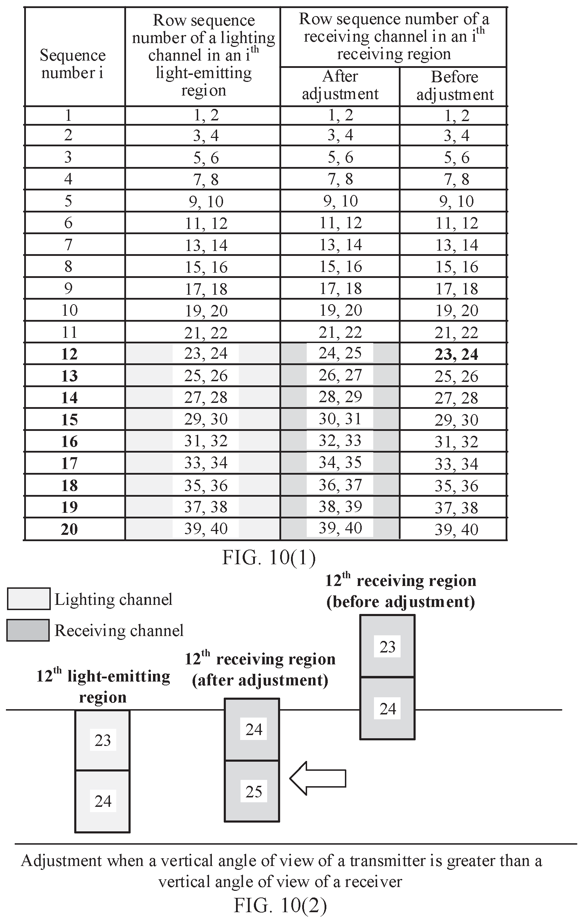

FIG. 10(1) and FIG. 10(2) are diagrams of a correspondence between lighting channels in a transmitter and receiving channels in a receiver in a detection apparatus according to an embodiment of this application. Based on the configuration shown in the mapping table in FIG. 6, when it is detected that the vertical angle of view of the transmitter is greater than the vertical angle of view of the receiver, a correspondence between some lighting channels in the array transmitter and some receiving channels in the array receiver is changed by applying the compensation scheme 1 (that is, gating timing of the receiving channels is adjusted). For the correspondence between the lighting channel and the receiving channel, refer to, for example, the mapping table in FIG. 10(1).

In FIG. 10(1), a quantity of lighting channels included in the transmitter is equal to a quantity of receiving channels included in the receiver, each of which is 40. Before adjustment, the 40 rows of lighting channels are in a one-to-one correspondence with the 40 rows of receiving channels, that is, a j^{th} row of lighting channels corresponds to a j^{th} row of receiving channels. For example, if the lighting channels are activated by using the "activating manner 1" in S901, the transmitter has 20 light-emitting regions and the receiver correspondingly has 20 receiving regions. If, starting from a 12^{th} (that is, P=12 described above) receiving region, energy of the echo signal received by the receiving region is lower than the energy lower limit value, a correspondence between some lighting channels and the receiving channel is changed by adjusting the gating timing of the receiving channels. It can be learned from FIG. 10(1) that, after the adjustment, a correspondence between 1^{st} to 22^{nd} rows of lighting channels in the column direction in the transmitter and the receiving channel in the column direction in the receiver is different from a correspondence between 23^{rd} to 38^{th} rows of lighting channels and the receiving channel in the column direction in the array receiver, that is, the 1^{st} to 22^{nd} rows of lighting channels respectively correspond to 1^{st} to 22^{nd} rows of receiving channels (which satisfies a condition that an a^{th} row of lighting channels corresponds to an a^{th} row of receiving channels, where a is an integer from 1 to 22), and the 23^{rd} to 38^{th} rows of lighting channels correspond to 24^{th} to 39^{th} rows of receiving channels (which satisfies a condition that a b^{th} row of lighting channels corresponds to a (b+1)^{th} row of receiving channels, where b is an integer from 23 to 38).

Here, FIG. 10(1) is merely used as an example of changing the correspondence between some lighting channels and the receiving channel by adjusting the gating timing of the receiving channels, in which it is not required that after the correspondence changes, a difference value between row sequence numbers corresponding to the receiving channels and the lighting channels is only "1", and may be "2" or another value, which is not specifically limited herein.

It can be understood that, because an activating manner of the lighting channels is still the "activating manner 1" in S901, and the correspondence between some lighting channels of the transmitter and some receiving channels of the receiver changes after the adjustment, row sequence numbers of receiving channels included in receiving regions corresponding to some light-emitting regions also change. For example, in FIG. 10(1), row sequence numbers of receiving channels included in a 12^{th} receiving region to a 19^{th} receiving region change compared with those before adjustment.

It can be learned from FIG. 10(1) that a ratio of a quantity of lighting channels included in each light-emitting region to a quantity of receiving channels included in a receiving region corresponding to the light-emitting region is a first value, the first value is a ratio of a total quantity of rows of lighting channels included in the transmitter (for example, "40") to a total quantity of rows of receiving channels included in the receiver (for example, "40"), and the first value is, for example, 1.

For example, an interval between two adjacent receiving regions is defined as a difference between a maximum row sequence number of a receiving channel in a P^{th} receiving region and a minimum row sequence number of a receiving channel in a (P-1)^{th} receiving region. In some possible embodiments, the interval between two adjacent receiving regions is defined as a difference between a row sequence number of a receiving channel in the P^{th} receiving region and a row sequence number of a receiving channel in the (P-1)^{th} receiving region, or a distance between centers of the P^{th} receiving region and the (P-1)^{th} receiving region in the column direction. This is not specifically limited herein. From the perspective of the interval between two adjacent receiving regions, in FIG. 10(1), there is a same interval between any two adjacent receiving regions in the first 11 receiving regions, an interval between the 12^{th} receiving region and the 11^{th} receiving region is greater than an interval between the 11^{th} receiving region and the 10^{th} receiving region, and there is a same interval between any two adjacent receiving regions in the 12^{th} receiving region to the 19^{th} receiving region.

The mapping table shown in FIG. 10(1) is applied to a scenario in which the vertical angle of view of the transmitter is greater than the vertical angle of view of the receiver. FIG. 10(2) shows a diagram of a vertical angle of view of a light-emitting region and a vertical angle of view of a receiving region present when the vertical angle of view of the transmitter is greater than the vertical angle of view of the receiver. In FIG. 10(1), the 12^{th} light-emitting region includes a 23^{rd} row of lighting channels and a 24^{th} row of lighting channels, and before adjustment, the 12^{th} receiving region includes the 23^{rd} row of receiving channels and the 24^{th} row of receiving channels. After adjustment, the correspondence between the lighting channels and the receiving channel changes, and thus the 12^{th} receiving region includes the 24^{th} row of receiving channels and the 25^{th} row of receiving channels. It can be learned that a matching degree between a vertical angle of view of the 12^{th} light-emitting region and a vertical angle of view of the 12^{th} receiving region is much higher than that before adjustment, and thus received energy of the 12^{th} receiving region can exceed an energy lower limit value. This can resolve a problem of a mismatch between the receiving angle of view and the transmitting angle of view of a flash lidar to some extent.

Here, a quantity of times of adjustment is not limited in embodiments of this application. The mapping table in FIG. 10(1) shows a result obtained by performing adjustment once. After the adjustment, if received energy of each receiving region in the 20 receiving regions is not lower than the energy lower limit value, the procedure ends. In some possible embodiments, it is possible that after the adjustment, only the first 16 receiving regions in the 20 receiving regions satisfy the condition that the received energy of each receiving region is not lower than the energy lower limit value. In this case, a second adjustment may be performed starting from the 17^{th} receiving region. This means that a correspondence between the 1^{st} to 22^{nd} rows of lighting channels in the column direction in the transmitter and receiving channels is different from a correspondence between 23^{rd} to 32^{nd} rows of lighting channels and receiving channels, and the correspondence between the 23^{rd} to 32^{nd} rows of lighting channels and the receiving channels is different from a correspondence between 33^{rd} to 40^{th} rows of lighting channels and receiving channels. For example, when adjustment is performed multiple times, it is not required that compensation schemes applied to each adjustment need to be the same.

For another example, that the 1^{st} to (M-1)^{th} rows of lighting channels respectively correspond to the 1^{st} to (M-1)^{th} rows of receiving channels in the N rows of receiving channels includes: The 1^{st} to (M-1)^{th} rows of lighting channels are in a one-to-one correspondence with the 1^{st} to (M-1)^{th} rows of receiving channels, that is, the j^{th} row of lighting channels corresponds to the j^{th} row of receiving channels, where j is an integer from 1 to M-1. That the M^{th} to N^{th} rows of lighting channels respectively correspond to the (M+1)^{th} to N^{th} rows of receiving channels in the N rows of receiving channels includes: The M^{th} row of lighting channels corresponds to (M+1)^{th} and (M+2)^{th} rows of receiving channels, the (M+1)^{th} row of lighting channels corresponds to (M+2)^{th} and (M+3)^{th} rows of receiving channels, ..., the (N-2)^{th} row of lighting channels corresponds to (N-1)^{th} and N^{th} rows of receiving channels, the (N-1)^{th} row of lighting channels corresponds to (N-2)^{th} and (N-1)^{th} rows of receiving channels, and the N^{th} row of lighting channels corresponds to (N-1)^{th} and N^{th} rows of receiving channels.

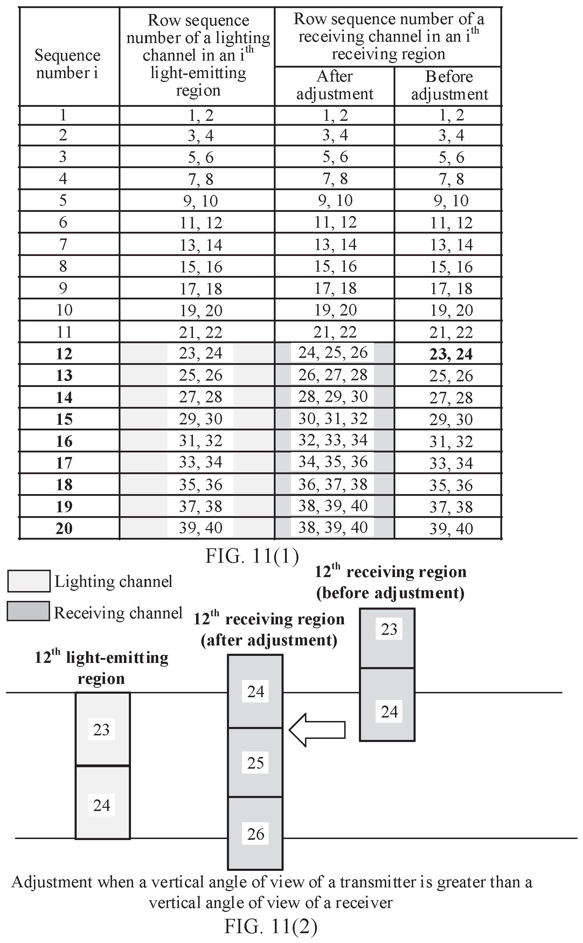

FIG. 11(1) and FIG. 11(2) are diagrams of another correspondence between lighting channels in a transmitter and receiving channels in a receiver in a detection apparatus according to an embodiment of this application. Based on the configuration shown in the mapping table in FIG. 6, when the vertical angle of view of the transmitter is greater than the vertical angle of view of the receiver, the correspondence between some lighting channels in the array transmitter and some receiving channels in the array receiver is changed by applying compensation scheme 1 and compensation scheme 4 described above. For the correspondence between the lighting channels and the receiving channels, refer to, for example, the mapping table shown in FIG. 11(1).

In FIG. 11(1), the correspondence between some lighting channels and the receiving channel is changed by adjusting the gating timing of the receiving channels. It can be learned that a correspondence between 1^{st} to 22^{nd} rows of lighting channels in the column direction in the transmitter and the receiving channels in the column direction in the receiver is different from a correspondence between 23^{rd} to 40^{th} rows of lighting channels and the receiving channels in the column direction in the receiver. For example, the 1^{st} to 22^{nd} rows of lighting channels respectively correspond to 1^{st} to 22^{nd} rows of receiving channels, specifically satisfying the condition that the a^{th} row of lighting channels corresponds to the a^{th} row of receiving channels, where a is an integer from 1 to 22; and 23^{rd} to 40^{th} rows of lighting channels correspond to 24^{th} to 40^{th} rows of receiving channels, where a b^{th} row of lighting channels corresponds to (b+1)^{th} and (b+2)^{th} rows of receiving channels, where b is an integer from 23 to 38, a 39^{th} row of lighting channels corresponds to 38^{th} and 39^{th} rows of receiving channels, and a 40^{th} row of lighting channels corresponds to 39^{th} and 40^{th} rows of receiving channels.

For example, if 23^{rd} and 24^{th} rows of lighting channels are simultaneously activated to form the 12^{th} light-emitting region, the 23^{rd} row of lighting channels corresponds to 24^{th} and 25^{th} rows of receiving channels, and the 24^{th} row of lighting channels corresponds to 25^{th} and 26^{th} rows of receiving channels, the 12^{th} receiving region corresponding to the 12^{th} light-emitting region includes 24^{th}, 25^{th}, and 26^{th} rows of receiving channels. A ratio of a quantity of lighting channels included in the 12^{th} light-emitting region to a quantity of receiving channels included in the 12^{th} receiving region is less than the first value.

Further, when the detection apparatus runs, the detection apparatus uses the "activating manner 1" in S901 to activate the 1^{st} to 22^{nd} rows of lighting channels of the transmitter to form 11 light-emitting regions, as shown in the first 11 light-emitting regions in FIG. 11(1). Based on the correspondence between the 1^{st} to 22^{nd} rows of lighting channels and the 1^{st} to 22^{nd} rows of receiving channels, 11 receiving regions are formed, as shown in the first 11 receiving regions in FIG. 11(1) (a quantity of receiving channels included in each receiving region is 2). The detection apparatus uses the "activating manner 2" in S901 to activate the 23^{rd} to 40^{th} rows of lighting channels of the transmitter to form 9 light-emitting regions, as shown in 12^{th} to 20^{th} light-emitting regions in FIG. 11(1). Based on the correspondence between the 23^{rd} to 40^{th} rows of lighting channels and the 24^{th} to 40^{th} rows of receiving channels, 9 receiving regions are formed, as shown in the 12^{th} to 20^{th} receiving regions in FIG. 11(1) (a quantity of receiving channels included in each receiving region is 3).

In addition, the mapping table shown in FIG. 11(1) is applied to a scenario in which the vertical angle of view of the transmitter is greater than the vertical angle of view of the receiver. FIG. 11(2) shows a diagram of a vertical angle of view of a light-emitting region and a vertical angle of view of a receiving region present when the vertical angle of view of the transmitter is greater than the vertical angle of view of the receiver. In FIG. 11(2), a 12^{th} light-emitting region includes a 23^{rd} row of lighting channels and a 24^{th} row of lighting channels, and before adjustment, the 12^{th} receiving region includes a 23^{rd} row of receiving channels and a 24^{th} row of receiving channels. After adjustment, the correspondence between the lighting channels and the receiving channels changes, and thus the 12^{th} receiving region includes the 24^{th} row of receiving channels, a 25^{th} row of receiving channels, and a 26^{th} row of receiving channels after adjustment. This makes a vertical angle of view of the 12^{th} receiving region be greater than a vertical angle of view of the 12^{th} light-emitting region. In this way, the 12^{th} receiving region can completely receive energy emitted by the 12^{th} light-emitting region, which helps increase system power and improve detection performance of the flash lidar.

In an example, the correspondence between the 1^{st} to (M-1)^{th} rows of lighting channels and the receiving channel in the column direction in the array receiver being different from the correspondence between the M^{th} to N^{th} rows of lighting channels and the receiving channel in the column direction in the array receiver includes: The 1^{st} to (M-1)^{th} rows of lighting channels respectively correspond to the 1^{st} to (M-1)^{th} rows of receiving channels in the N rows of receiving channels; and the M^{th} to N^{th} rows of lighting channels respectively correspond to the (M-1)^{th} to (N-1)^{th} rows of receiving channels in the N rows of receiving channels.

For example, that the 1^{st} to (M-1)^{th} rows of lighting channels respectively correspond to 1^{st} to (M-1)^{th} rows of receiving channels in the N rows of receiving channels includes: The 1^{st} to (M-1)^{th} rows of lighting channels are in a one-to-one correspondence with the 1^{st} to (M-1)^{th} rows of receiving channels, to be specific, the 1^{st} row of lighting channels corresponds to the 1^{st} row of receiving channels, the 2^{nd} row of lighting channels corresponds to the 2^{nd} row of receiving channels, ..., the j^{th} row of lighting channels corresponds to the j^{th} row of receiving channels, ..., the (M-1)^{th} row of lighting channels corresponds to the (M-1)^{th} row of receiving channels. That the M^{th} to N^{th} rows of lighting channels respectively correspond to the (M-1)^{th} to (N-1)^{th} rows of receiving channels in the N rows of receiving channels includes: The M^{th} row of lighting channels corresponds to the (M-1)^{th} row of receiving channels, the (M+1)^{th} row of lighting channels corresponds to the M^{th} row of receiving channels, ..., the (N-1)^{th} row of lighting channels corresponds to the (N-2)^{th} row of receiving channels, and the N^{th} row of lighting channels corresponds to the (N-1)^{th} row of receiving channels.

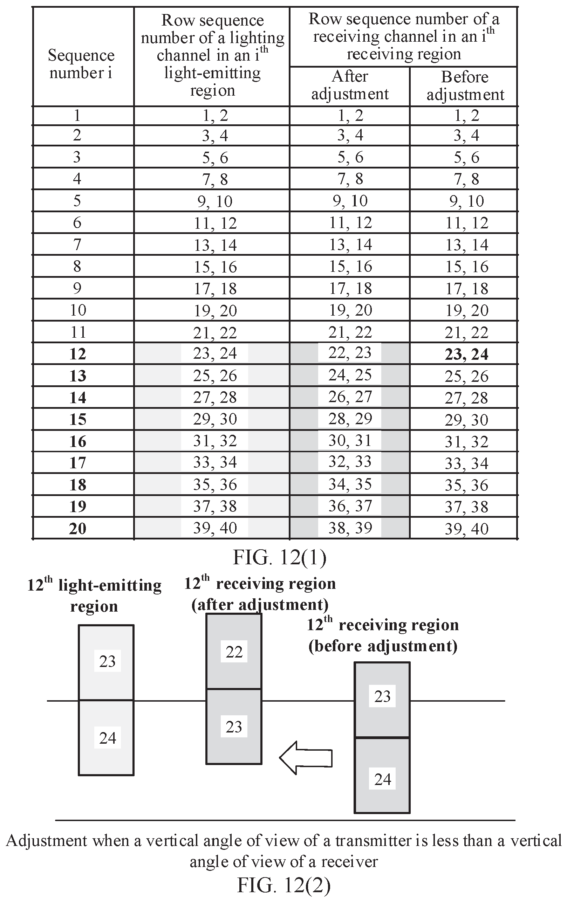

FIG. 12(1) and FIG. 12(2) are diagrams of another correspondence between lighting channels in a transmitter and receiving channels in a receiver in a detection apparatus according to an embodiment of this application. Based on the configuration shown in the mapping table in FIG. 6, when the vertical angle of view of the transmitter is less than the vertical angle of view of the receiver, the correspondence between some lighting channels in the array transmitter and some receiving channels in the array receiver is changed by applying compensation scheme 1 (that is, adjusting the gating timing of the receiving channels) described above. For the correspondence between the lighting channels and the receiving channels, refer to, for example, the mapping table in FIG. 12(1).

In FIG. 12(1), before adjustment, 40 rows of lighting channels of the transmitter are in a one-to-one correspondence with 40 rows of receiving channels of the receiver, that is, a j^{th} row of lighting channels corresponds to a j^{th} row of receiving channels. The lighting channels are activated by using the "activating manner 1" in S901. For the 20 light-emitting regions of the transmitter and the 20 receiving regions of the receiver, refer to FIG. 12(1). If, starting from a 12^{th} (that is, P=12 described above) receiving region, energy of the echo signal received by the receiving region is lower than the energy lower limit value, a correspondence between some lighting channels and the receiving channel is changed by adjusting the gating timing of the receiving channels. It can be learned from FIG. 12(1) that, after the adjustment, a correspondence between 1^{st} to 22^{nd} rows of lighting channels in the column direction in the transmitter and the receiving channels in the column direction in the receiver is different from a correspondence between 23^{rd} to 40^{th} rows of lighting channels and the receiving channels in the column direction in the array receiver, that is, the 1^{st} to 22^{nd} rows of lighting channels respectively correspond to 1^{st} to 22^{nd} rows of receiving channels (satisfying a condition that an a^{th} row of lighting channels corresponds to an a^{th} row of receiving channels, where a is an integer from 1 to 22), and the 23^{rd} to 40^{th} rows of lighting channels correspond to 22^{nd} to 39^{th} rows of receiving channels (satisfying a condition that a b^{th} row of lighting channels corresponds to a (b-1)^{th} row of receiving channels, where b is an integer from 23 to 40).

Here, FIG. 11(1) is merely used as an example of changing the correspondence between some lighting channels and the receiving channel by adjusting the gating timing of the receiving channels, in which it is not required that after the correspondence changes, a difference value between row sequence numbers corresponding to the receiving channels and the lighting channels is only "-1", and may be "-2" or another value, which is not specifically limited herein.

It can be understood that, because an activating manner of the lighting channels is still the "activating manner 1" in S901, and the correspondence between some lighting channels of the transmitter and some receiving channels of the receiver changes after the adjustment, row sequence numbers of receiving channels included in receiving regions corresponding to some light-emitting regions also change. For example, in FIG. 12(1), row sequence numbers of receiving channels included in the 12^{th} receiving region to a 20^{th} receiving region change compared with those before adjustment.

From the perspective of the interval between two adjacent receiving regions, in FIG. 12(1), there is a same interval between any two adjacent receiving regions in the first 11 receiving regions after adjustment, an interval between the 12^{th} receiving region and the 11^{th} receiving region is less than an interval between the 11^{th} receiving region and the 10^{th} receiving region, and there is a same interval between any two adjacent receiving regions in the 12^{th} receiving region to the 20^{th} receiving region.

The mapping table shown in FIG. 12(1) may be applied to a scenario in which the vertical angle of view of the transmitter is less than the vertical angle of view of the receiver. FIG. 12(2) shows a diagram of a vertical angle of view of a light-emitting region and a vertical angle of view of a receiving region present when the vertical angle of view of the transmitter is less than the vertical angle of view of the receiver. In FIG. 12(2), a 12^{th} light-emitting region includes a 23^{rd} row of lighting channels and a 24^{th} row of lighting channels, and before adjustment, the 12^{th} receiving region includes a 23^{rd} row of receiving channels and a 24^{th} row of receiving channels. After adjusting the gating timing of the receiving channels, the correspondence between the lighting channels and the receiving channels changes, and thus the 12^{th} receiving region includes a 22^{nd} row of receiving channels and the 23^{rd} row of receiving channels. It can be learned that a matching degree between a vertical angle of view of the 12^{th} light-emitting region and a vertical angle of view of the 12^{th} receiving region is much higher than that before the adjustment, and thus received energy of the 12^{th} receiving region can be higher than the energy lower limit value. This can resolve a problem of a mismatch between the receiving angle of view and the transmitting angle of view of a flash lidar some extent.

The mapping table in FIG. 12(1) is a result after one time of adjustment is performed. This embodiment of this application does not limit a quantity of times of adjustment and nor does it limit a compensation scheme applied to each time of adjustment to be the same.

In some possible embodiments, when the vertical angle of view of the transmitter is less than the vertical angle of view of the receiver, in addition to using compensation scheme 1 (that is, adjusting the gating timing of the receiving channels) to perform the adjustment shown in FIG. 12(1), the correspondence between some lighting channels and some receiving channels can alternatively be changed by combining compensation scheme 1 and compensation scheme 4 (that is, increasing the quantity of receiving channels that are simultaneously enabled). For example, in FIG. 12(1), the 23^{rd} row of lighting channels and the 24^{th} row of lighting channels are used as an example, and compensation scheme 1 is applied so that the 23^{rd} row of lighting channels corresponds to the 22^{nd} row of receiving channels and the 24^{th} row of lighting channels corresponds to the 23^{rd} row of receiving channels. It is assumed that compensation scheme 1 and compensation scheme 4 are applied so that the 23^{rd} row of lighting channels corresponds to 22^{nd} and 23^{rd} rows of receiving channels, and the 24^{th} row of lighting channels corresponds to 23^{rd} and 24^{th} rows of receiving channels, and correspondingly, the 23^{rd} row of lighting channels and the 24^{th} row of lighting channels are simultaneously activated to form the 12^{th} light-emitting region. In this case, the 12^{th} receiving region corresponding to the 12^{th} light-emitting region includes 22^{nd}, 23^{rd}, and 24^{th} rows of receiving channels. This makes the vertical angle of view of the 12^{th} receiving region be greater than the vertical angle of view of the 12^{th} light-emitting region. In this way, the 12^{th} receiving region can completely receive energy emitted by the 12^{th} light-emitting region, which helps increase system power and improve detection performance of the flash lidar. It can be learned that compensation scheme 4 described above is not only applicable to a scenario in which the vertical angle of view of the array transmitter is less than the vertical angle of view of the array receiver, but also applicable to a scenario in which the vertical angle of view of the array transmitter is greater than the vertical angle of view of the array receiver.

In another implementation, a correspondence between 1^{st} to (M-1)^{th} rows of receiving channels in the column direction in the array receiver and a lighting channel in the column direction in the array transmitter is different from a correspondence between M^{th} to N^{th} rows of receiving channels and the lighting channel in the column direction in the array transmitter, where both M and N are positive integers greater than 2, and M is less than N.

In an example, the correspondence between the 1^{st} to (M-1)^{th} rows of receiving channels and the lighting channel in the column direction in the array transmitter being different from the correspondence between the M^{th} to N^{th} rows of receiving channels and the lighting channel in the column direction in the array transmitter includes: The 1^{st} to (M-1)^{th} rows of receiving channels respectively correspond to the 1^{st} to (M-1)^{th} rows of lighting channels in the N rows of lighting channels; and the M^{th} to N^{th} rows of receiving channels respectively correspond to the (M-1)^{th} to (N-1)^{th} rows of lighting channels in the N rows of lighting channels.

For example, that the 1^{st} to (M-1)^{th} rows of receiving channels respectively correspond to the 1^{st} to (M-1)^{th} rows of lighting channels in the N rows of lighting channels includes: The 1^{st} to (M-1)^{th} rows of receiving channels are in a one-to-one correspondence with the 1^{st} to (M-1)^{th} rows of lighting channels, that is, a j^{th} row of receiving channels corresponds to a j^{th} row of lighting channels, where j is an integer from 1 to M-1. That the M^{th} to N^{th} rows of receiving channels respectively correspond to the (M-1)^{th} to (N-1)^{th} rows of lighting channels in the N rows of lighting channels includes: The M^{th} row of receiving channels corresponds to the (M-1)^{th} row of lighting channels, the (M+1)^{th} row of receiving channels corresponds to the M^{th} row of lighting channels, ..., the (N-1)^{th} row of receiving channels corresponds to the (N-2)^{th} row of lighting channels, and the N^{th} row of receiving channels corresponds to the (N-1)^{th} row of lighting channels.

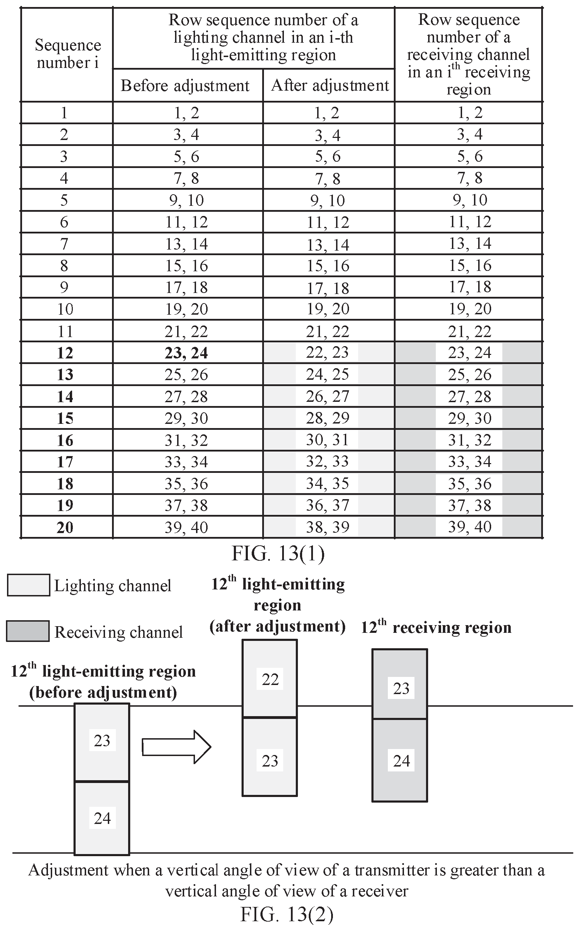

FIG. 13(1) and FIG. 13(2) are diagrams of another correspondence between lighting channels in a transmitter and receiving channels in a receiver in a detection apparatus according to an embodiment of this application. Based on the configuration shown in the mapping table in FIG. 6, when it is detected that the vertical angle of view of the transmitter is greater than the vertical angle of view of the receiver, the correspondence between some lighting channels in the array transmitter and some receiving channels in the array receiver is changed by applying compensation scheme 2 (that is, adjusting the activation timing of the lighting channels) described above. For the correspondence between the lighting channels and the receiving channels, refer to, for example, the mapping table in FIG. 13(1).

In FIG. 13(1), the correspondence between some lighting channels and the receiving channel is changed by adjusting the activation timing of the lighting channels. It can be learned that, in the column direction in the receiver, a correspondence between 1^{st} to 22^{nd} rows of receiving channels and the lighting channels in the column direction in the transmitter is different from a correspondence between 23^{rd} to 40^{th} rows of receiving channels and the lighting channels in the column direction in the transmitter. For example, the 1^{st} to 22^{nd} rows of receiving channels respectively correspond to 1^{st} to 22^{nd} rows of lighting channels, specifically satisfying the condition that the a^{th} row of receiving channels corresponds to the a^{th} row of lighting channels, where a is an integer from 1 to 22; and 23^{rd} to 40^{th} rows of receiving channels correspond to the 22^{nd} to 39^{th} rows of lighting channels, where a b^{th} row of receiving channels corresponds to a (b-1)^{th} row of lighting channels, where b is an integer from 23 to 40.

Here, FIG. 13(1) is merely used as an example of changing the correspondence between some lighting channels and the receiving channel by adjusting the gating timing of the lighting channels, in which it is not required that after the correspondence changes, a difference value between row sequence numbers corresponding to the receiving channels and the lighting channels is only "1", and may be "2" or another value, which is not specifically limited herein.

For example, when the detection apparatus runs, the detection apparatus uses the "activating manner 1" in S901 to activate the 1^{st} to 22^{nd} rows of lighting channels of the transmitter to form 11 light-emitting regions, as shown in the first 11 light-emitting regions in FIG. 13(1). Based on the correspondence between the 1^{st} to 22^{nd} rows of lighting channels and the 1^{st} to 22^{nd} rows of receiving channels, 11 receiving regions are formed, as shown in the first 11 receiving regions in FIG. 13(1). The detection apparatus adjusts the activation timing of the lighting channels and continues to use the "activating manner 1" in S901 to activate the 22^{nd} to 39^{th} rows of lighting channels of the transmitter to form 9 light-emitting regions, as shown in 12^{th} to 20^{th} light-emitting regions in FIG. 13(1). Based on the correspondence between the 22^{nd} to 39^{th} rows of lighting channels and the 23^{rd} to 40^{th} rows of receiving channels, 9 receiving regions are formed, as shown in the 12^{th} to 20^{th} receiving regions in FIG. 13(1).

For example, an interval between two adjacent light-emitting regions is defined as a difference between a maximum row sequence number of a lighting channel in a P^{th} light-emitting region and a minimum row sequence number of a lighting channel in a (P-1)^{th} light-emitting region. In some possible embodiments, an interval between two adjacent receiving regions is defined as a difference between a row sequence number of a lighting channel in the P^{th} light-emitting region and a row sequence number of a lighting channel in the (P-1)^{th} light-emitting region, or a distance between centers of the P^{th} light-emitting region and the (P-1)^{th} light-emitting region in the column direction. This is not specifically limited herein. From the perspective of the interval between two adjacent light-emitting regions, in FIG. 13(1), there is a same interval between any two adjacent light-emitting regions in the first 11 light-emitting regions after adjustment, an interval between the 12^{th} light-emitting region and the 11^{th} light-emitting region is less than an interval between the 11^{th} light-emitting region and the 10^{th} light-emitting region, and there is a same interval between any two adjacent light-emitting regions in the 12^{th} light-emitting region to the 20^{th} light-emitting region.

The mapping table in FIG. 13(1) is a result after one time of adjustment is performed. This embodiment of this application does not limit a quantity of times of adjustment and nor does it limit a compensation scheme applied to each time of adjustment to be the same.

The mapping table shown in FIG. 13(1) may be applied to a scenario in which the vertical angle of view of the transmitter is greater than the vertical angle of view of the receiver. FIG. 13(2) shows a diagram of a vertical angle of view of a light-emitting region and a vertical angle of view of a receiving region present when the vertical angle of view of the transmitter is greater than the vertical angle of view of the receiver. In FIG. 13(2), a 12^{th} receiving region includes a 23^{rd} row of receiving channels and a 24^{th} row of receiving channels, and before adjustment, the 12^{th} light-emitting region includes a 23^{rd} row of lighting channels and a 24^{th} row of lighting channels. After adjusting the activation timing of the lighting channels, the correspondence between the lighting channels and the receiving channels changes, and thus the 12^{th} light-emitting region includes a 22^{nd} row of lighting channels and the 23^{rd} row of lighting channels. It can be learned that a matching degree between a vertical angle of view of the 12^{th} light-emitting region and a vertical angle of view of the 12^{th} receiving region is much higher than that before the adjustment, and thus received energy of the 12^{th} receiving region can be higher than the energy lower limit value. This can resolve the problem of the mismatch between the receiving angle of view and the transmitting angle of view of the flash lidar.

For another example, the correspondence between the 1^{st} to (M-1)^{th} rows of receiving channels and the lighting channel in the column direction in the array transmitter being different from the correspondence between the M^{th} to N^{th} rows of receiving channels and the lighting channel in the column direction in the array transmitter includes: The 1^{st} to (M-1)^{th} rows of receiving channels respectively correspond to the 1^{st} to (M-1)^{th} rows of lighting channels in the N rows of lighting channels; and the M^{th} to N^{th} rows of receiving channels respectively correspond to the (M-1)^{th} to N^{th} rows of lighting channels in the N rows of lighting channels. That the 1^{st} to (M-1)^{th} rows of receiving channels respectively correspond to the 1^{st} to (M-1)^{th} rows of lighting channels in the N rows of lighting channels includes: The 1^{st} to (M-1)^{th} rows of receiving channels are in a one-to-one correspondence with the 1^{st} to (M-1)^{th} rows of lighting channels, that is, a j^{th} row of receiving channels corresponds to a j^{th} row of lighting channels, where j is an integer from 1 to M-1. That the M^{th} to N^{th} rows of receiving channels respectively correspond to the (M-1)^{th} to N^{th} rows of lighting channels in the N rows of lighting channels includes: The M^{th} row of receiving channels corresponds to (M-1)^{th} and M^{th} rows of lighting channels, the (M+1)^{th} row of receiving channels corresponds to M^{th} and (M+1)^{th} rows of lighting channels, ..., the (N-2)^{th} row of receiving channels corresponds to (N-3)^{th} and (N-2)^{th} rows of lighting channels, the (N-1)^{th} row of receiving channels corresponds to (N-2)^{th} and (N-1)^{th} rows of lighting channels, and the N^{th} row of receiving channels corresponds to (N-1)^{th} and N^{th} rows of lighting channels.

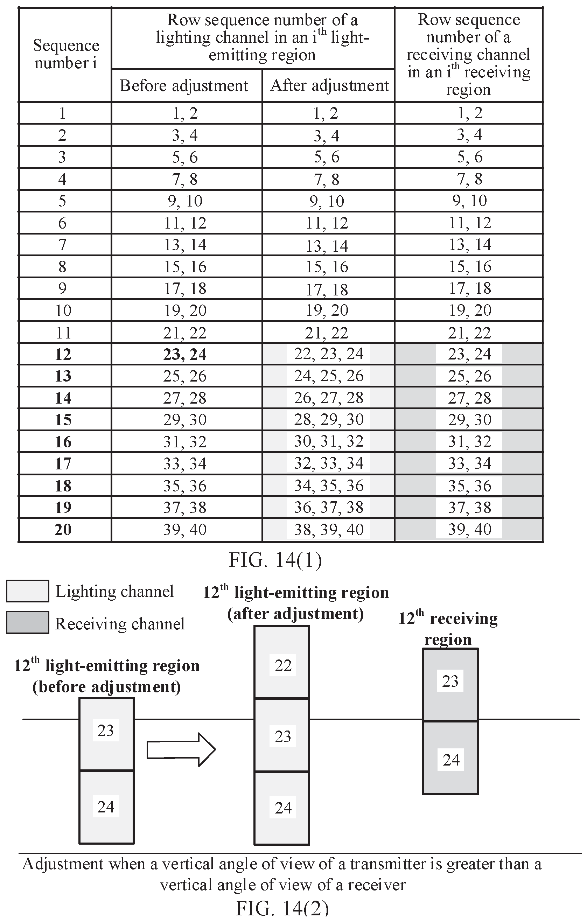

FIG. 14(1) and FIG. 14(2) are diagrams of another correspondence between lighting channels in a transmitter and receiving channels in a receiver in a detection apparatus according to an embodiment of this application. Based on the configuration shown in the mapping table in FIG. 6, when the vertical angle of view of the transmitter is greater than the vertical angle of view of the receiver, the correspondence between some lighting channels in the array transmitter and some receiving channels in the array receiver is changed by applying compensation scheme 2 and compensation scheme 3 described above. For the correspondence between the lighting channels and the receiving channels, refer to, for example, the mapping table shown in FIG. 14(1).

In FIG. 14(1), the correspondence between some lighting channels and the receiving channel is changed by adjusting the activation timing of the lighting channels. It can be learned that, in the column direction in the receiver, a correspondence between 1^{st} to 22^{nd} rows of receiving channels and the lighting channels in the column direction in the transmitter is different from a correspondence between 23^{rd} to 40^{th} rows of receiving channels and the lighting channels in the column direction in the transmitter. For example, the 1^{st} to 22^{nd} rows of receiving channels respectively correspond to 1^{st} to 22^{nd} rows of lighting channels, specifically satisfying the condition that the a^{th} row of receiving channels corresponds to the a^{th} row of lighting channels, where a is an integer from 1 to 22; and 23^{rd} to 40^{th} rows of receiving channels correspond to the 22^{nd} to 40^{th} rows of lighting channels, where a b^{th} row of receiving channels corresponds to (b-1)^{th} and b^{th} rows of lighting channels, where b is an integer from 23 to 40. For example, the 23^{rd} row of receiving channels corresponds to 22^{nd} and 23^{rd} rows of lighting channels, and the 24^{th} row of receiving channels corresponds to 23^{rd} and 24^{th} rows of lighting channels. Correspondingly, 22^{nd}, 23^{rd}, and 24^{th} rows of lighting channels are simultaneously activated to form the 12^{th} light-emitting region, and the 12^{th} receiving region corresponding to the 12^{th} light-emitting region includes 23^{rd} and 24^{th} rows of receiving channels.

For example, if two adjacent rows of receiving channels are gated each time to form a receiving region, 40 rows of receiving channels of the receiver can form 20 receiving regions. Based on the correspondence between the receiving channels and the lighting channels, the transmitter also has 20 light-emitting regions. For details, reference is made to FIG. 14(1). In FIG. 14(1), after adjustment, because the correspondence between the 1^{st} to 22^{nd} rows of receiving channels and the lighting channels in the column direction in the transmitter is different from the correspondence between the 23^{rd} to 40^{th} rows of receiving channels and the lighting channels in the column direction in the transmitter, a quantity of lighting channels included in each light-emitting region in the first 11 light-emitting regions is 2, and a quantity of lighting channels included in each light-emitting region in the last 9 light-emitting regions is 3. In addition, starting from i=12, a ratio of a quantity of lighting channels included in an i^{th} light-emitting region to a quantity of receiving channels included in an i^{th} receiving region is greater than the first value.

The mapping table shown in FIG. 14(1) is applied to a scenario in which the vertical angle of view of the transmitter is greater than the vertical angle of view of the receiver. FIG. 14(2) shows a diagram of a vertical angle of view of a light-emitting region and a vertical angle of view of a receiving region present when the vertical angle of view of the transmitter is greater than the vertical angle of view of the receiver. In FIG. 14(2), a 12^{th} receiving region includes a 23^{rd} row of receiving channels and a 24^{th} row of receiving channels, and before adjustment, a 12^{th} light-emitting region includes a 23^{rd} row of lighting channels and a 24^{th} row of lighting channels. After adjustment, the correspondence between the lighting channels and the receiving channels changes, and thus the 12^{th} light-emitting region includes a 22^{nd} row of lighting channels, a 23^{rd} row of lighting channels, and a 24^{th} row of lighting channels. This makes a vertical angle of view of the 12^{th} light-emitting region be greater than a vertical angle of view of the 12^{th} receiving region. In this way, the light-emitting region emits more energy, which increases received energy of the receiving region, and improves detection performance of the flash lidar.

In an example, the correspondence between the 1^{st} to (M-1)^{th} rows of receiving channels and the lighting channel in the column direction in the array transmitter being different from the correspondence between the M^{th} to N^{th} rows of receiving channels and the lighting channel in the column direction in the array transmitter includes: The 1^{st} to (M-1)^{th} rows of receiving channels respectively correspond to the 1^{st} to (M-1)^{th} rows of lighting channels in the N rows of lighting channels; and the M^{th} to N^{th} rows of receiving channels respectively correspond to the (M+1)^{th} to N^{th} rows of lighting channels in the N rows of lighting channels.

For example, that the 1^{st} to (M-1)^{th} rows of receiving channels respectively correspond to the 1^{st} to (M-1)^{th} rows of lighting channels in the N rows of lighting channels includes: The 1^{st} to (M-1)^{th} rows of receiving channels are in a one-to-one correspondence with the 1^{st} to (M-1)^{th} rows of lighting channels, that is, a j^{th} row of receiving channels corresponds to a j^{th} row of lighting channels, where j is an integer from 1 to M-1. That the M^{th} to N^{th} rows of receiving channels respectively correspond to the (M+1)^{th} to N^{th} rows of lighting channels in the N rows of lighting channels includes: The M^{th} row of receiving channels corresponds to the (M+1)^{th} row of lighting channels, the (M+1)^{th} row of receiving channels corresponds to the (M+2)^{th} row of lighting channels, ..., the (N-1)^{th} row of receiving channels corresponds to the N^{th} row of lighting channels, and the N^{th} row of receiving channels corresponds to the N^{th} row of lighting channels.

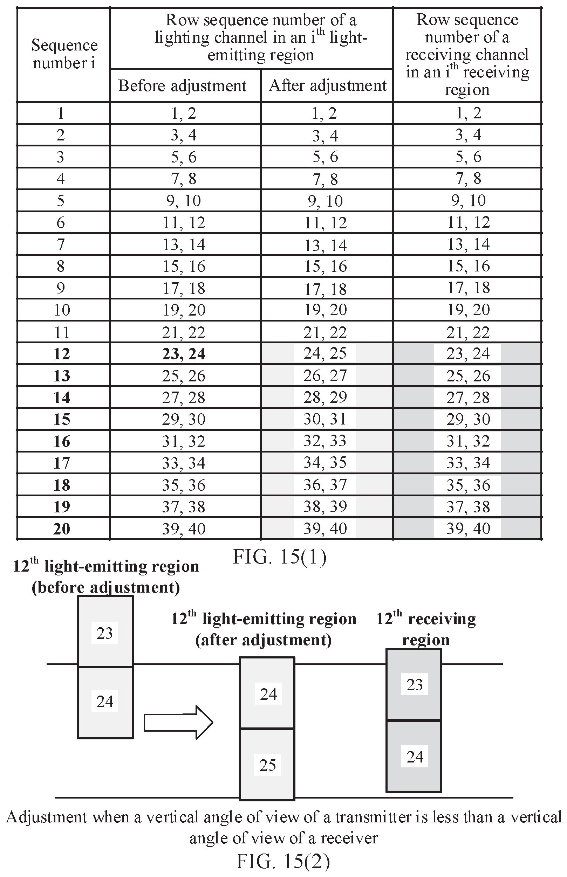

FIG. 15(1) and FIG. 15(2) are diagrams of another correspondence between lighting channels in a transmitter and receiving channels in a receiver in a detection apparatus according to an embodiment of this application. Based on the configuration shown in the mapping table in FIG. 6, when it is detected that the vertical angle of view of the transmitter is less than the vertical angle of view of the receiver, the correspondence between some lighting channels in the array transmitter and some receiving channels in the array receiver is changed by applying compensation scheme 2 (that is, adjusting the activation timing of the lighting channels) described above. For the correspondence between the lighting channels and the receiving channels, refer to, for example, the mapping table in FIG. 15(1).

In FIG. 15(1), the correspondence between some lighting channels and the receiving channel is changed by adjusting the activation timing of the lighting channels. It can be learned that, in the column direction in the receiver, 1^{st} to 22^{nd} rows of receiving channels respectively correspond to 1^{st} to 22^{nd} rows of lighting channels, specifically satisfying the condition that an a^{th} row of receiving channels corresponds to an a^{th} row of lighting channels, where a is an integer from 1 to 22; and 23^{rd} to 39^{th} rows of receiving channels correspond to 24^{th} to 40^{th} rows of lighting channels, where a b^{th} row of receiving channels corresponds to a (b+1)^{th} row of lighting channels, where b is an integer from 23 to 39; and a 40^{th} row of receiving channels corresponds to the 40^{th} row of lighting channels. Here, FIG. 15(1) is merely used as an example of changing the correspondence between some lighting channels and the receiving channel by adjusting the gating timing of the receiving channels, in which it is not required that after the correspondence changes, a difference value between row sequence numbers corresponding to the receiving channels and the lighting channels is only "-1", and may be "-2" or another value, which is not specifically limited herein.

For example, when the detection apparatus runs, the detection apparatus uses the "activating manner 1" in S901 to activate the 1^{st} to 22^{nd} rows of lighting channels of the transmitter to form 11 light-emitting regions, as shown in the first 11 light-emitting regions in FIG. 15(1). Based on the correspondence between the 1^{st} to 22^{nd} rows of lighting channels and the 1^{st} to 22^{nd} rows of receiving channels, 11 receiving regions are formed, as shown in the first 11 receiving regions in FIG. 15(1). The detection apparatus adjusts the activation timing of the lighting channels, skips a 23^{rd} row of lighting channels, and continues to use the "activating manner 1" described above to activate the 24^{th} to 40^{th} rows of lighting channels of the transmitter to form 9 light-emitting regions, as shown in 12^{th} to 20^{th} light-emitting regions in FIG. 15(1). Based on the correspondence between the 22^{nd} to 39^{th} rows of lighting channels and the 23^{rd} to 40^{th} rows of receiving channels, 9 receiving regions are formed, as shown in the 12^{th} to 20^{th} receiving regions in FIG. 15(1).

From the perspective of the interval between two adjacent light-emitting regions, in FIG. 15(1), there is a same interval between any two adjacent light-emitting regions in the first 11 light-emitting regions after adjustment, an interval between the 12^{th} light-emitting region and the 11^{th} light-emitting region is greater than an interval between the 11^{th} light-emitting region and the 10^{th} light-emitting region. The mapping table in FIG. 15(1) is a result after one time of adjustment is performed. This embodiment of this application does not limit a quantity of times of adjustment and nor does it limit a compensation scheme applied to each time of adjustment to be the same.

The mapping table shown in FIG. 15(1) may be applied to a scenario in which the vertical angle of view of the transmitter is less than the vertical angle of view of the receiver. FIG. 15(2) shows a diagram of a vertical angle of view of a light-emitting region and a vertical angle of view of a receiving region present when the vertical angle of view of the transmitter is less than the vertical angle of view of the receiver. In FIG. 15(2), a 12^{th} receiving region includes a 23^{rd} row of receiving channels and a 24^{th} row of receiving channels, and before adjustment, the 12^{th} light-emitting region includes a 23^{rd} row of lighting channels and a 24^{th} row of lighting channels. After adjusting the activation timing of the lighting channels, the correspondence between the lighting channels and the receiving channels changes, and the 12^{th} light-emitting region includes a 24^{th} row of lighting channels and a 25^{th} row of lighting channels. It can be learned that a matching degree between a vertical angle of view of the 12^{th} light-emitting region and a vertical angle of view of the 12^{th} receiving region is much higher than that before the adjustment, and thus received energy of the 12^{th} receiving region can be higher than the energy lower limit value. This can resolve the problem of the mismatch between the receiving angle of view and the transmitting angle of view of the flash lidar.

In some possible embodiments, when the vertical angle of view of the transmitter is less than the vertical angle of view of the receiver, in addition to using compensation scheme 2 (that is, adjusting the activation timing of the lighting channels) to perform the adjustment shown in FIG. 15(1), the correspondence between some lighting channels and some receiving channels can alternatively be changed by combining compensation scheme 2 and compensation scheme 3 (that is, increasing the quantity of lighting channels that are simultaneously activated). For example, in FIG. 15(1), the 23^{rd} row of receiving channels and the 24^{th} row of receiving channels are used as an example, and compensation scheme 2 is applied so that the 23^{rd} row of receiving channels corresponds to the 24^{th} row of lighting channels and the 24^{th} row of receiving channels corresponds to the 25^{th} row of lighting channels. It is assumed that compensation scheme 2 and compensation scheme 3 are applied so that the 23^{rd} row of receiving channels corresponds to 23^{rd} and 24^{th} rows of lighting channels, and the 24^{th} row of receiving channels corresponds to 24^{th} and 25^{th} rows of lighting channels, and correspondingly, the 23^{rd}, 24^{th}, and 25^{th} rows of lighting channels are simultaneously activated to form the 12^{th} light-emitting region. In this case, the 12^{th} receiving region corresponding to the 12^{th} light-emitting region includes 23^{rd} and 24^{th} rows of receiving channels. This makes the vertical angle of view of the 12^{th} light-emitting region be greater than the vertical angle of view of the 12^{th} receiving region. In this way, it is beneficial to increase system power and improve detection performance of the flash lidar. It can be learned that compensation scheme 3 described above is not only applicable to a scenario in which the vertical angle of view of the array transmitter is less than the vertical angle of view of the array receiver, but also applicable to a scenario in which the vertical angle of view of the array transmitter is greater than the vertical angle of view of the array receiver.

In the embodiment shown in FIG. 9, based on a multi-channel transmitter and a multi-channel receiver, the problem of the mismatch between the receiving angle of view and the transmitting angle of view of the flash lidar can be resolved to some extent without increasing additional costs, which helps improve detection performance of the lidar. For example, the correspondence between some lighting channels in the transmitter and some receiving channels in the receiver is changed by adjusting the activation timing of the lighting channels or adjusting the gating timing of the receiving channels. This can improve a matching degree between the transient vertical angle of view of the transmitter and the transient vertical angle of view of the receiver, and improve detection efficiency of the receiver. For another example, the correspondence between some lighting channels in the transmitter and some receiving channels in the receiver is changed by increasing the quantity of lighting channels that are simultaneously activated or increasing the quantity of receiving channels that are simultaneously enabled. This helps increase system power and improve detection performance of the lidar.

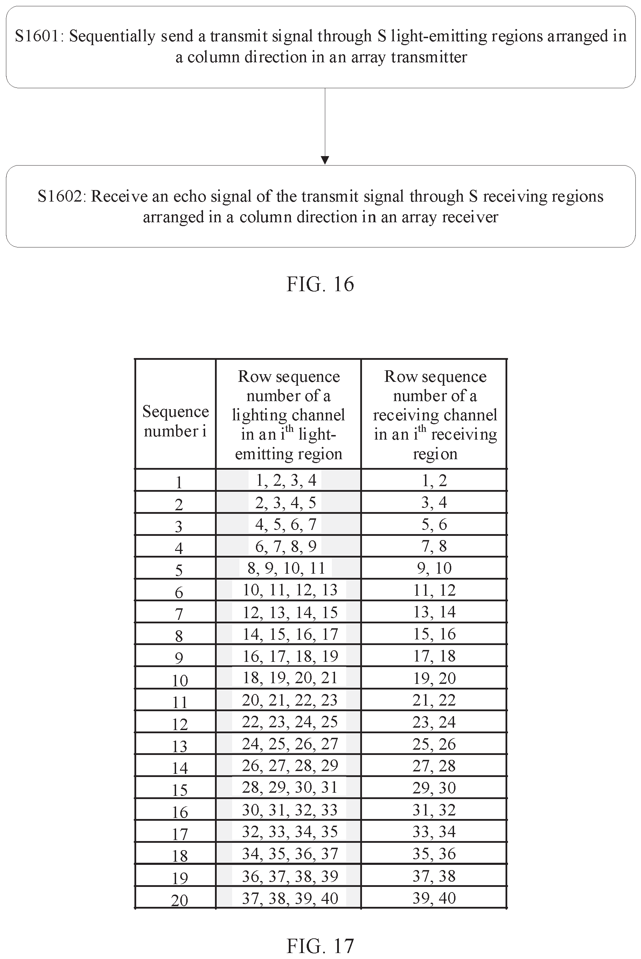

In some possible embodiments, compensation scheme 3 (that is, increasing the quantity of lighting channels that are simultaneously activated) or compensation scheme 4 (that is, increasing the quantity of receiving channels that are simultaneously enabled) described above may also be applied to initialization enabling of the lidar. FIG. 16 is a flowchart of another detection method according to an embodiment of this application. The method can be applied to a detection apparatus (for example, the detection apparatus 10 shown in FIG. 1) that includes an array transmitter and an array receiver. The array transmitter includes A rows of lighting channels, and the array receiver includes B rows of receiving channels, where A and B are both positive integers. For example, A is equal to B, or A and B are in a multiple relationship. The method includes but is not limited to the following steps.

S1601: Sequentially send a transmit signal through S light-emitting regions arranged in a column direction in an array transmitter.

Each light-emitting region in the S light-emitting regions includes multiple adjacent rows of lighting channels, and the lighting channels in the light-emitting region belong to the A rows of lighting channels.

In an implementation, sequentially sending the transmit signal through the S light-emitting regions arranged in the column direction in the array transmitter includes: in the column direction in the array transmitter, sequentially sending a transmit signal through a 1^{st} light-emitting region, sending a transmit signal through a 2^{nd} light-emitting region, ..., and sending a transmit signal through an S^{th} light-emitting region.

S1602: Receive an echo signal of the transmit signal through S receiving regions arranged in a column direction in an array receiver.

An i^{th} light-emitting region in the S light-emitting regions corresponds to an i^{th} receiving region in the S receiving regions. Here, both i and S are positive integers, i is less than or equal to S, and S is less than A.

In an implementation, a ratio of a quantity of lighting channels included in the i^{th} light-emitting region to a quantity of receiving channels included in the i^{th} receiving region is greater than a ratio of A to B.

In an example, a same lighting channel is included in any two adjacent light-emitting regions in the S light-emitting regions.

FIG. 17 is a diagram of a correspondence between lighting channels of a light-emitting region in a transmitter and receiving channels of a receiving region in a receiver according to an embodiment of this application. The mapping table shown in FIG. 17 is, for example, an example of implementing compensation scheme 3 (that is, increasing the quantity of lighting channels that are simultaneously activated) described above based on the mapping table shown in FIG. 6.

It can be learned from the foregoing description in FIG. 6 that the array transmitter includes 40 rows of lighting channels and the array receiver includes 40 rows of receiving channels, and then the ratio of A to B is "1". For example, in the column direction in the array transmitter, multiple rows of lighting channels are simultaneously activated each time to form a light-emitting region. As shown in the mapping table in FIG. 17, the array transmitter includes 20 light-emitting regions and 20 receiving regions, where an i^{th} light-emitting region corresponds to an i^{th} receiving region, and i is an integer from 1 to 20. In FIG. 17, each light-emitting region includes 4 lighting channels, and in the column direction in the array transmitter, a same lighting channel is included in two adjacent light-emitting regions. For example, a 1^{st} light-emitting region and a 2^{nd} light-emitting region each include 2^{nd}, 3^{rd}, and 4^{th} rows of lighting channels, and the 2^{nd} light-emitting region and a 3^{rd} light-emitting region each include 4^{th} and 5^{th} rows of lighting channels. Each receiving region includes 2 receiving channels. It can be learned from FIG. 17 that the ratio of the quantity of lighting channels included in the i^{th} light-emitting region to the quantity of receiving channels included in the i^{th} receiving region is 2, which is greater than the ratio "1" of A to B, and satisfies a condition that a vertical angle of view of the i^{th} light-emitting region is greater than a vertical angle of view of the i^{th} receiving region. In this way, it is beneficial to increase system power and improve detection performance (for example, range detection performance) of the flash lidar.

The mapping table shown in FIG. 17 is merely used as an example of a correspondence between lighting channels in a light-emitting region and receiving channels in a receiving region after compensation scheme 3 (that is, increasing the quantity of lighting channels that are simultaneously activated) is applied, in which a quantity of lighting channels included in the light-emitting region is not limited to be only "4", a quantity of lighting channels included in each light-emitting region is not limited to be the same, and a quantity of receiving channels included in each receiving region is also not limited to be the same.

In an implementation, a ratio of a quantity of lighting channels included in the i^{th} light-emitting region to a quantity of receiving channels included in the i^{th} receiving region is less than a ratio of A to B.

In an example, a same receiving channel is included in any two adjacent receiving regions of the S receiving regions.

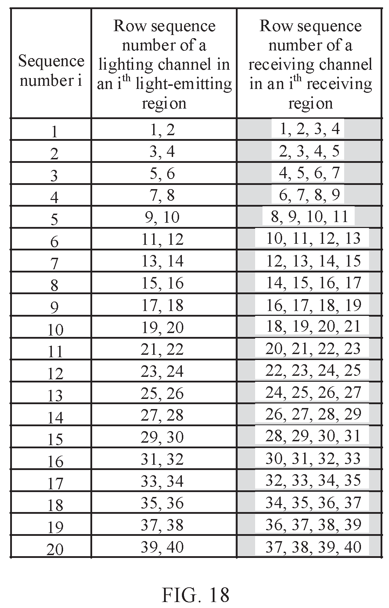

FIG. 18 is a diagram of another correspondence between lighting channels of a light-emitting region in a transmitter and receiving channels of a receiving region in a receiver according to an embodiment of this application. The mapping information shown in FIG. 18 is, for example, an example of implementing compensation scheme 4 (that is, increasing the quantity of receiving channels that are simultaneously enabled) described above based on the mapping table shown in FIG. 6.

It can be learned from the foregoing description in FIG. 6 that the array transmitter includes 40 rows of lighting channels and the array receiver includes 40 rows of receiving channels, and then the ratio of A to B is "1". For example, in the column direction in the array transmitter, multiple rows of lighting channels are simultaneously activated each time to form a light-emitting region. As shown in the mapping table in FIG. 18, the array transmitter includes 20 light-emitting regions and 20 receiving regions, where an i^{th} light-emitting region corresponds to an i^{th} receiving region, and i is an integer from 1 to 20. In FIG. 18, each light-emitting region includes 2 lighting channels, each receiver includes 4 receiving channels, and in the column direction in the array receiver, a same receiving channel is included in two adjacent receiving regions. For example, a 1^{st} receiving region and a 2^{nd} receiving region each include 2^{nd}, 3^{rd}, and 4^{th} rows of receiving channels, and the 2^{nd} receiving region and a 3^{rd} receiving region each include 4^{th} and 5^{th} rows of receiving channels. It can be learned from FIG. 18 that the ratio of the quantity of lighting channels included in the i^{th} light-emitting region to the quantity of receiving channels included in the i^{th} receiving region is 0.5, which is less than the ratio "1" of A to B, and satisfies a condition that a vertical angle of view of the i^{th} light-emitting region is less than a vertical angle of view of the i^{th} receiving region. In this way, it is beneficial to increase system power and improve detection performance (for example, range detection performance) of the flash lidar.

The mapping table shown in FIG. 18 is merely used as an example of a correspondence between lighting channels in a light-emitting region and receiving channels in a receiving region after compensation scheme 4 (that is, increasing the quantity of receiving channels that are simultaneously enabled) is applied, in which a quantity of receiving channels included in the receiving region is not limited to be only "4", a quantity of lighting channels included in each light-emitting region is not limited to be the same, and a quantity of receiving channels included in each receiving region is also not limited to be the same.

In the embodiment shown in FIG. 16, based on the multi-channel transmitter and the multi-channel receiver, when the mismatch between the receiving angle of view and the transmitting angle of view exists in the flash lidar (for example, the vertical angle of view of the transmitter does not match the vertical angle of view of the receiver), detection performance of the lidar can be improved to some extent without increasing additional costs. For example, by increasing the quantity of lighting channels that are simultaneously activated, a transient vertical angle of view of the transmitter is greater than a transient vertical angle of view of the receiver. For another example, by increasing the quantity of receiving channels that are simultaneously enabled, a transient vertical angle of view of the transmitter is less than a transient vertical angle of view of the receiver. Either of the manners helps increase system power and improves detection performance of the lidar.

The following describes an apparatus provided in embodiments of this application.

An embodiment of this application provides a detection apparatus. The detection apparatus includes an array transmitter and an array receiver. The array transmitter is configured to send a transmit signal, and the array receiver is configured to receive an echo signal corresponding to the transmit signal. The detection apparatus is configured to implement the foregoing detection method, for example, the detection method in the embodiments shown in FIG. 9 and FIG. 16.

An embodiment of this application provides a lidar, and the lidar includes the foregoing detection apparatus (for example, the detection apparatus 10 shown in FIG. 1).

An embodiment of this application further provides a terminal. The terminal includes the foregoing detection apparatus (for example, the detection apparatus 10 shown in FIG. 1), or includes the foregoing lidar.

Optionally, the terminal may be a smart terminal or a transportation means such as a vehicle, an uncrewed aerial vehicle, or a robot.

In the foregoing embodiments in this specification, the descriptions of embodiments have respective focuses. For a part that is not described in detail in an embodiment, refer to related descriptions in other embodiments. In addition, in embodiments of this application, unless otherwise specified or there is a logic conflict, terms and/or descriptions between embodiments are consistent and may be mutually referenced, and technical features in different embodiments may be combined into a new embodiment based on an internal logical relationship thereof.

It should be noted that, a person of ordinary skill in the art may understand that, all or some of the steps in methods of the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM) or another optical disc memory, a magnetic disk memory, a magnetic tape memory, or any other computer-readable medium that can be configured to carry or store data.

The technical solutions of this application essentially, or the contributing part, or all or some of the technical solutions may be implemented in a form of a software product. The computer program product is stored in a storage medium and includes several instructions for enabling a device (which may be a personal computer, a server, a network device, a robot, a single-chip microcomputer, a chip, a robot, or the like) to perform all or some of the steps of the methods in embodiments of this application.

## Claims

1. A detection method, applied to a detection apparatus comprising an array transmitter and an array receiver, wherein the array transmitter comprises multiple rows of lighting channels, and the array receiver comprises multiple rows of receiving channels; and the method comprises:
sequentially sending a transmit signal through N rows of lighting channels arranged in a column direction in the array transmitter, and receiving an echo signal of the transmit signal through N rows of receiving channels arranged in a column direction in the array receiver, wherein
a correspondence between 1^{st} to (M-1)^{th} rows of lighting channels in the column direction in the array transmitter and a receiving channel in the column direction in the array receiver is different from a correspondence between M^{th} to N^{th} rows of lighting channels and the receiving channel in the column direction in the array receiver; or
a correspondence between 1^{st} to (M-1)^{th} rows of receiving channels in the column direction in the array receiver and a lighting channel in the column direction in the array transmitter is different from a correspondence between M^{th} to N^{th} rows of receiving channels and the lighting channel in the column direction in the array transmitter; and
both M and N are positive integers greater than 2, and M is less than N.

2. The method according to claim 1, wherein the correspondence between the 1^{st} to (M-1)^{th} rows of lighting channels and the receiving channel in the column direction in the array receiver being different from the correspondence between the M^{th} to N^{th} rows of lighting channels and the receiving channel in the column direction in the array receiver comprises:
the 1^{st} to (M-1)^{th} rows of lighting channels respectively correspond to the 1^{st} to (M-1)^{th} rows of receiving channels in the N rows of receiving channels; and
the M^{th} to N^{th} rows of lighting channels respectively correspond to (M+1)^{th} to N^{th} rows of receiving channels in the N rows of receiving channels.

3. The method according to claim 1, wherein the correspondence between the 1^{st} to (M-1)^{th} rows of lighting channels and the receiving channel in the column direction in the array receiver being different from the correspondence between the M^{th} to N^{th} rows of lighting channels and the receiving channel in the column direction in the array receiver comprises:
the 1^{st} to (M-1)^{th} rows of lighting channels respectively correspond to the 1^{st} to (M-1)^{th} rows of receiving channels in the N rows of receiving channels; and
the M^{th} to N^{th} rows of lighting channels respectively correspond to (M-1)^{th} to (N-1)^{th} rows of receiving channels in the N rows of receiving channels.

4. The method according to claim 1, wherein the correspondence between the 1^{st} to (M-1)^{th} rows of receiving channels and the lighting channel in the column direction in the array transmitter being different from the correspondence between the M^{th} to N^{th} rows of receiving channels and the lighting channel in the column direction in the array transmitter comprises:
the 1^{st} to (M-1)^{th} rows of receiving channels respectively correspond to the 1^{st} to (M-1)^{th} rows of lighting channels in the N rows of lighting channels; and
the M^{th} to N^{th} rows of receiving channels respectively correspond to (M-1)^{th} to (N-1)^{th} rows of lighting channels in the N rows of lighting channels.

5. The method according to claim 1, wherein the correspondence between the 1^{st} to (M-1)^{th} rows of receiving channels and the lighting channel in the column direction in the array transmitter being different from the correspondence between the M^{th} to N^{th} rows of receiving channels and the lighting channel in the column direction in the array transmitter comprises:
the 1^{st} to (M-1)^{th} rows of receiving channels respectively correspond to the 1^{st} to (M-1)^{th} rows of lighting channels in the N rows of lighting channels; and
the M^{th} to N^{th} rows of receiving channels respectively correspond to (M+1)^{th} to N^{th} rows of lighting channels in the N rows of lighting channels.

6. The method according to claim 2 or 4, wherein
a vertical angle of view of the array transmitter is greater than a vertical angle of view of the array receiver.

7. The method according to claim 3 or 5, wherein
a vertical angle of view of the array transmitter is less than a vertical angle of view of the array receiver.

8. The method according to any one of claims 1 to 7, wherein
multiple adjacent rows of lighting channels in the N rows of lighting channels simultaneously emit light to form a light-emitting region, receiving channels corresponding to the multiple adjacent rows of lighting channels in the N rows of receiving channels form a receiving region, and the receiving region comprises multiple adjacent rows of receiving channels.

9. The method according to claim 8, wherein a ratio of a quantity of lighting channels comprised in the light-emitting region to a quantity of receiving channels comprised in the receiving region is a first value, and the first value is a ratio of a total quantity of rows of the lighting channels comprised in the array transmitter to a total quantity of rows of the receiving channels comprised in the array receiver.

10. The method according to claim 8, wherein a first light-emitting region in the array transmitter corresponds to a first receiving region in the array receiver, and the first light-emitting region and the first receiving region satisfy the following condition:
a ratio of a quantity of lighting channels comprised in the first light-emitting region to a quantity of receiving channels comprised in the first receiving region is greater than a first value; or
a ratio of a quantity of lighting channels comprised in the first light-emitting region to a quantity of receiving channels comprised in the first receiving region is less than a first value, wherein
the first value is a ratio of a total quantity of rows of the lighting channels comprised in the array transmitter to a total quantity of rows of the receiving channels comprised in the array receiver.

11. A detection method, applied to a detection apparatus comprising an array transmitter and an array receiver, wherein the array transmitter comprises A rows of lighting channels, and the array receiver comprises B rows of receiving channels; and the method comprises:
sequentially sending a transmit signal through S light-emitting regions arranged in a column direction in the array transmitter, and receiving an echo signal of the transmit signal through S receiving regions arranged in a column direction in the array receiver, wherein an i^{th} light-emitting region in the S light-emitting regions corresponds to an i^{th} receiving region in the S receiving regions; and
a ratio of a quantity of lighting channels comprised in the i^{th} light-emitting region to a quantity of receiving channels comprised in the i^{th} receiving region is greater than a ratio of A to B, or a ratio of a quantity of lighting channels comprised in the i^{th} light-emitting region to a quantity of receiving channels comprised in the i^{th} receiving region is less than a ratio of A to B, wherein A, B, S, and i are all positive integers, i is less than or equal to S, and S is less than A.

12. The method according to claim 11, wherein when the ratio of the quantity of lighting channels comprised in the i^{th} light-emitting region to the quantity of receiving channels comprised in the i^{th} receiving region is greater than the ratio of A to B,
a same lighting channel is comprised in any two adjacent light-emitting regions in the S light-emitting regions.

13. The method according to claim 11, wherein when the ratio of the quantity of lighting channels comprised in the i^{th} light-emitting region to the quantity of receiving channels comprised in the i^{th} receiving region is less than the ratio of A to B,
a same receiving channel is comprised in any two adjacent receiving regions in the S receiving regions.

14. The method according to any one of claims 11 to 13, wherein a vertical angle of view of the array transmitter is greater than a vertical angle of view of the array receiver, or a vertical angle of view of the array transmitter is less than a vertical angle of view of the array receiver.

15. A detection apparatus, wherein the detection apparatus comprises an array transmitter and an array receiver, the array transmitter is configured to send a transmit signal, the array receiver is configured to receive an echo signal corresponding to the transmit signal, and the detection apparatus is configured to perform the method according to any one of claims 1 to 10, or perform the method according to any one of claims 11 to 14.

16. A lidar, wherein the lidar comprises the detection apparatus according to claim 15.

17. A terminal, wherein the terminal comprises the detection apparatus according to claim 15, or comprises the lidar according to claim 16.

18. A computer-readable storage medium, comprising computer instructions, wherein when the computer instructions are run by a processor, the method according to any one of claims 1 to 10 is implemented, or the method according to any one of claims 11 to 14 is implemented.
